(19) Europäisches Patentamt European Patent Office Office européen des brevets

(11) **EP 4 751 982 A1**

(12) **EUROPEAN PATENT APPLICATION**

(43) Date of publication:
**03.06.2026 Bulletin 2026/23**

(21) Application number: **25216944.6**

(22) Date of filing: **19.11.2025**

(51) International Patent Classification (IPC):
**B60L 50/60** (2019.01)    **B60L 15/20** (2006.01)

(52) Cooperative Patent Classification (CPC):
**B60L 50/60; B60L 15/20;** B60L 2240/14;
B60L 2250/12; B60L 2250/26; B60L 2260/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.11.2024 JP 2024206438**

(71) Applicant: **TOYOTA JIDOSHA KABUSHIKI
KAISHA**
**Toyota-shi, Aichi-ken, 471-8571 (JP)**

(72) Inventor: **ASAHARA, Norimi**
**TOYOTA-SHI, AICHI-KEN, 471-8571 (JP)**

(74) Representative: **Cabinet Beau de Loménie
103, rue de Grenelle / CS 90800
75340 Paris Cedex 07 (FR)**

(54) **BATTERY ELECTRIC VEHICLE AND CONTROL DEVICE**

(57)    A battery electric vehicle (100) includes one or more processors (102) that control an output of an electric motor (2). In a case where the battery electric vehicle (100) is in an on-demand mode, the one or more processors (102) calculate, using an on-demand model, a virtual acceleration of a virtual mobility in response to driving operation of a driver, and control the output of the electric motor (2) such that an acceleration of the battery electric vehicle (100) equals the virtual acceleration. Further, in a case where a virtual mobility to be reproduced is switched to a second virtual mobility, the one or more processors (102) control the output of the electric motor (2) in a transition mode in which at least some of driving environment properties simulated by the on-demand model are changed to properties of the second virtual mobility in stages.

FIG. 8

**Description**

1. Field of the Invention

The present disclosure relates to a battery electric vehicle that has an electric motor as a drive source.

2. Description of Related Art

An electric motor can be controlled so as to output desired motor torque through control of an applied voltage or a field magnet. A technology has been under consideration that takes advantage of this to reproduce various driving environments in a battery electric vehicle by appropriately controlling an electric motor of the battery electric vehicle. For example, Japanese Patent No. 7298566 (JP 7298566 B) discloses a battery electric vehicle that can simulatively reproduce manual gear shifting behavior of a manual transmission vehicle. Further, JP 7298566 B discloses displaying a rotation speed of a virtual engine on a display device and outputting, from a speaker, an engine sound simulating a sound of an engine model selected from a plurality of types.

SUMMARY OF THE INVENTION

Preference for a driving environment is different from one driver to another. Drivers sometimes feel like enjoying the driving environments of various mobilities according to their moods. In view of this, the inventors involved with the present disclosure have been exploring an "on-demand mode" that simulatively reproduces the driving environments of a plurality of virtual mobilities in one battery electric vehicle by using a plurality of models modeled after these virtual mobilities. In the on-demand mode, an electric motor is controlled so as to reproduce, in the battery electric vehicle, operational sensations experienced when driving a virtual mobility selected from the virtual mobilities.

A case will be considered where, while the battery electric vehicle is in the on-demand mode, the driver switches the virtual mobility to be reproduced. In this case, depending on the pattern of the virtual mobility before the switching and the virtual mobility after the switching, the operational sensations may change significantly between before and after the switching. In such a case, it is difficult for the driver to adjust himself or herself immediately to the operational sensations of the virtual mobility after the switching. As a result, the driver may feel stressed or become distracted from safe driving.

The present disclosure has been made in view of the above-described problem. The present disclosure provides a technology that can reduce the difficulty faced by a driver after switching of a virtual mobility.

A first aspect of the present disclosure relates to a battery electric vehicle having an electric motor as a drive source. The battery electric vehicle includes a driving operation member used for driving, one or more storage devices, and one or more processors that control an output of the electric motor. The one or more storage devices manage a plurality of on-demand models modeled after a plurality of virtual mobilities different from one another in driving environment properties in response to driving operation of a driver. In a case where the battery electric vehicle is in an on-demand mode, the one or more processors acquire, from the one or more storage devices, a target on-demand model corresponding to a target virtual mobility selected from the virtual mobilities; based on an operated state of the driving operation member and a travel state of the battery electric vehicle, calculate, using the target on-demand model, a virtual acceleration of the target virtual mobility in response to the driving operation of the driver; and control the output of the electric motor such that an acceleration of the battery electric vehicle equals the virtual acceleration. Further, in a case where the target virtual mobility is switched from a first virtual mobility to a second virtual mobility, the one or more processors control the output of the electric motor in a transition mode in which at least some of driving environment properties simulated by the target on-demand model are changed to properties of the second virtual mobility in stages.

A second aspect of the present disclosure relates to a control device of a battery electric vehicle having an electric motor as a drive source. The battery electric vehicle includes a driving operation member used for driving. The control device includes one or more storage devices and one or more processors that control an output of the electric motor. The one or more storage devices manage a plurality of on-demand models modeled after a plurality of virtual mobilities different from one another in driving environment properties in response to driving operation of a driver. In a case where the battery electric vehicle is in an on-demand mode, the one or more processors acquire, from the one or more storage devices, a target on-demand model corresponding to a target virtual mobility selected from the virtual mobilities; based on an operated state of the driving operation member and a travel state of the battery electric vehicle, calculate, using the target on-demand model, a virtual acceleration of the target virtual mobility in response to the driving operation of the driver; and control the output of the electric motor such that an acceleration of the battery electric vehicle equals the virtual acceleration. Further, in a case where the target virtual mobility is switched from a first virtual mobility to a second virtual mobility, the one or more processors control the output of the electric motor in a transition mode in which at least some of driving environment properties simulated by the target on-demand model are changed to properties of the second virtual mobility in stages.

According to the present disclosure, in a case where the target virtual mobility is switched, the output of the electric motor is controlled in the transition mode. In the transition mode, at least some of the driving environment properties of the target on-demand model change to the properties of the second virtual mobility in stages. This can make a significant change in the operational sensations after switching of the target virtual mobility less likely. As a result, the difficulty faced by the driver after switching of the target virtual mobility can be reduced.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a view showing a configuration of a battery electric vehicle according to an embodiment;
FIG. 2 is a tree diagram showing one example of inputs of selection that an HMI receives regarding a control mode of the battery electric vehicle according to the embodiment;
FIG. 3 is a view showing one example of a functional configuration of a control device that functions as a drive control device;
FIG. 4 is a view showing one example of an acceleration property of a target virtual mobility reproduced in the battery electric vehicle;
FIG. 5 is a view showing one example of a functional configuration of an on-demand mode calculation unit;
FIG. 6A is a view showing one example of a function of a transition mode according to a first specific example;
FIG. 6B is a view showing one example of the function of the transition mode according to the first specific example;
FIG. 7A is a view showing one example of the function of the transition mode according to a second specific example;
FIG. 7B is a view showing one example of the function of the transition mode according to the second specific example;
FIG. 8 is a flowchart showing a processing flow of a transition mode determination process;
FIG. 9A is a flowchart showing a processing flow of a process involved with determination of a transition start condition;
FIG. 9B is a flowchart showing a processing flow of a process involved with determination of the transition start condition;
FIG. 10A is a flowchart showing a processing flow of a process involved with determination of a transition end condition;
FIG. 10B is a flowchart showing a processing flow of a process involved with determination of the transition end condition;
FIG. 11 is a view showing an example of implementation of the transition mode determination process;
FIG. 12 is a view showing one example of a configuration of an on-demand model; and
FIG. 13 is a view showing one example of a functional configuration of a control device that functions as an on-board equipment control device.

DETAILED DESCRIPTION OF EMBODIMENTS

In the following, an embodiment of the present disclosure will be described with reference to the drawings. The same or corresponding parts are denoted by the same reference signs throughout the drawings, and description thereof will be simplified or omitted.

1 Configuration of Power System of Battery Electric Vehicle

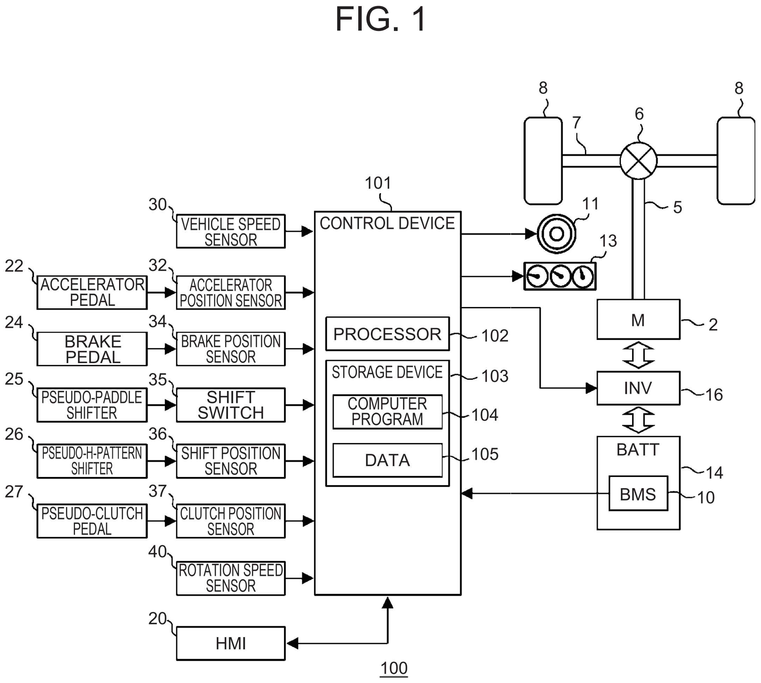

FIG. 1 is a view schematically showing a configuration of a battery electric vehicle 100 according to the embodiment of the present disclosure. First, a configuration of a power system of the battery electric vehicle 100 will be described with reference to FIG. 1.

The battery electric vehicle 100 includes an electric motor (M) 2 as a traction drive source. The electric motor 2 is, for example, a three-phase alternating-current motor. An inverter (INV) 16 is mounted on the electric motor 2. An output shaft of the electric motor 2 is connected to a propeller shaft 5 through a speed reducer (not shown). The propeller shaft 5 is connected to a differential gear 6. The differential gear 6 is connected to right and left drive wheels 8 by right and left driveshafts 7. The drive wheels may be front wheels or may be rear wheels.

The inverter 16, the electric motor 2, the speed reducer, and the differential gear 6 may be integrally configured as an e-axle. In this case, the battery electric vehicle 100 does not include the propeller shaft 5, and the e-axle is connected to the driveshafts 7. As another modified example, the battery electric vehicle 100 may have a configuration of four-wheel drive. For example, the battery electric vehicle 100 may include a transfer connected to the electric motor 2, and may be configured to distribute the output of the electric motor 2 to the front wheels and the rear wheels by the transfer. Further, for example, the battery electric vehicle 100 may be configured to include an e-axle for each of the front driveshafts 7 and the rear driveshafts 7.

The inverter 16 is connected to a battery (BATT) 14. The inverter 16 is, for example, a voltage-type inverter and controls motor torque of the electric motor 2 by PWM control. That is, the battery electric vehicle 100 is a battery electric vehicle (BEV) that travels on electric energy stored in the battery 14 using the electric motor 2 as a drive source.

2 Configuration of Control System of Battery Electric Vehicle

Subsequently, a configuration of a control system of the battery electric vehicle 100 will be described with reference to FIG. 1.

The battery electric vehicle 100 includes a vehicle speed sensor 30. The vehicle speed sensor 30 outputs a signal indicating a vehicle speed of the battery electric vehicle 100. At least one of wheel sensors (not shown) respectively provided on the right and left front wheels and the right and left rear wheels is used as the vehicle speed sensor 30.

The battery electric vehicle 100 includes an accelerator position sensor 32. The accelerator position sensor 32 is provided on an accelerator pedal 22 and outputs a signal indicating an operated state of the accelerator pedal 22. The operated state of the accelerator pedal 22 typically includes an accelerator operation amount and an accelerator operation speed. The battery electric vehicle 100 may include, instead of the accelerator pedal 22, a hand-operated lever-type or dial-type accelerator operation device. Also in this case, the accelerator position sensor 32 outputs a signal indicating an operated state of such an accelerator operation device.

The battery electric vehicle 100 includes a brake position sensor 34. The brake position sensor 34 is provided on a brake pedal 24 and outputs a signal indicating an operated state of the brake pedal 24. The operated state of the brake pedal 24 typically includes a brake operation amount and a brake operation speed.

Each of the accelerator pedal 22 and the brake pedal 24 is one of driving operation members used for driving of the battery electric vehicle 100. The battery electric vehicle 100 according to this embodiment further includes, as driving operation members, a pseudo-paddle shifter 25, a pseudo-H-pattern shifter 26, and a pseudo-clutch pedal 27. The pseudo-paddle shifter 25, the pseudo-H-pattern shifter 26, and the pseudo-clutch pedal 27 are driving operation members (hereinafter referred to as "pseudo-gear shifting operation members") that simulate operation members used for gear shifting operation of a vehicle equipped with a manual gear shifting transmission (hereinafter referred to simply as "manual gear shifting vehicle").

The pseudo-paddle shifter 25 simulates a paddle shifter that is one type of sequential shifter. The pseudo-paddle shifter 25 has a structure resembling a shift paddle mounted on a steering wheel or a steering shaft, and right and left paddles thereof can be independently moved. The pseudo-paddle shifter 25 is provided with a shift switch 35. The shift switch 35 outputs a signal indicating an operated state of the pseudo-paddle shifter 25. Specifically, the shift switch 35 outputs an upshift signal when one of the right and left paddles is pulled and outputs a downshift signal when the other paddle is pulled.

In this embodiment, the battery electric vehicle 100 may be configured to include a lever-type or dial-type sequential shifter in place of the pseudo-paddle shifter 25 or in addition to the pseudo-paddle shifter 25. Also in this case, the shift switch 35 outputs an upshift signal and a downshift signal according to an operated state of the sequential shifter.

The pseudo-H-pattern shifter 26 simulates an H-pattern shifter. The pseudo-H-pattern shifter 26 has a structure resembling a shift stick provided on a console, and can be moved among shift positions along an H-shaped gate. The pseudo-H-pattern shifter 26 is provided with a shift position sensor 36. The shift position sensor 36 outputs a signal indicating a selected shift position as an operated state of the pseudo-H-pattern shifter 26. For example, as shift positions selectable by the pseudo-H-pattern shifter 26, neutral, 1st, 2nd, 3rd, 4th, 5th, and 6th are provided.

The pseudo-H-pattern shifter 26 may be configured to function as a selector for selecting a shift position (e.g.: D (drive), P (parking), R (reverse), and N (neutral)) of the battery electric vehicle 100. For example, the pseudo-H-pattern shifter 26 is configured such that the shift positions selected by the pseudo-H-pattern shifter 26 also correspond to the shift positions of the battery electric vehicle 100. Alternatively, the pseudo-H-pattern shifter 26 may have a configuration that additionally includes a shift position for selecting a shift position of the battery electric vehicle 100. The battery electric vehicle 100 may include a selector separately from the pseudo-H-pattern shifter 26.

The pseudo-clutch pedal 27 has a structure resembling a clutch pedal included in a conventional manual gear shifting vehicle. For example, the pseudo-clutch pedal 27 includes a reaction force mechanism that generates a reaction force in response to the driver's stepping thereon. A position when no stepping force is exerted is a starting end position of the pseudo-clutch pedal 27, and a position when it is stepped on to a farthest point is a terminal end position of the pseudo-clutch pedal 27. The driver can operate the pseudo-clutch pedal 27 from the starting end position to the terminal end position against a reaction force from the reaction force mechanism. The pseudo-clutch pedal 27 is provided with a clutch position sensor 37. The clutch position sensor 37 outputs a signal indicating an operated state of the pseudo-clutch pedal 27. The operated state of the pseudo-clutch pedal 27 typically includes an amount of stepping on the pseudo-clutch pedal 27.

In this embodiment, the pseudo-clutch pedal 27 is a foot-operated pedaltype driving operation member.

However, the battery electric vehicle 100 may be configured to include a hand-operated lever-type or dial-type pseudo-clutch operation device in place of the pseudo-clutch pedal 27. Like the pseudo-clutch pedal 27, the pseudo-clutch operation device may be configured such that the driver can operate the pseudo-clutch operation device from a starting end position to a terminal end position against a reaction force. For the pseudo-clutch operation device, various structures can be adopted that allow operational sensations like those of a clutch pedal included in a conventional manual gear shifting vehicle to be experienced through the foot or hand.

Thus, the driving operation members included in the battery electric vehicle 100 according to this embodiment include the above-described pseudo-gear shifting operation members, compared with those in an ordinary BEV. As will be described later, the battery electric vehicle 100 according to this embodiment has, as a control mode, an "on-demand mode" that reproduces the driving environment properties of a virtual mobility selected from a plurality of virtual mobilities. The above-described pseudo-gear shifting operation members are driving operation members that are used mainly when the battery electric vehicle 100 is in the on-demand mode. In particular, when the battery electric vehicle 100 is in the on-demand mode, the driving operation members used for driving operation switch according to the virtual mobility to be reproduced. Alternatively, the function of each driving operation member switches according to the virtual mobility to be reproduced. The above-described pseudo-gear shifting operation members may be configured so as not to function when the battery electric vehicle 100 is not in the on-demand mode. However, operation of the pseudo-gear shifting operation members may be given some kind of function also when the battery electric vehicle 100 is not in the on-demand mode. For example, the pseudo-paddle shifter 25 may be used to set the intensity of regenerative brake.

In addition, the battery electric vehicle 100 may include various types of driving operation members, such as a steering wheel, for driving involved with steering. Further, the battery electric vehicle 100 may include a special driving operation member that is used when a specific virtual mobility is selected. For example, the battery electric vehicle 100 may include a control panel having a plurality of switches.

The battery electric vehicle 100 includes a rotation speed sensor 40. The rotation speed sensor 40 is provided in the electric motor 2 and outputs a signal indicating a rotation speed of the electric motor 2.

The battery electric vehicle 100 includes a battery management system (BMS) 10. The battery management system 10 is a device that monitors a cell voltage, current, temperature, etc., of the battery 14. In particular, the battery management system 10 has a function of estimating a state of charge (SOC) of the battery 14.

The battery electric vehicle 100 includes a human-machine interface (HMI) 20. The HMI 20 presents various information to the driver through display or sound and receives various inputs from the driver. The HMI 20 is composed of displays (e.g.: a multiinformation display, a meter display, and a multimedia display), a touch screen, switches (e.g.: a steering switch, a multimedia switch, and a door switch), a touch pad, a speakerphone, a microphone, etc. For example, the HMI 20 displays various information on the display and receives inputs from the driver regarding the displayed contents through touch operation on the touch screen.

The battery electric vehicle 100 includes a speaker 11. The speaker 11 includes an in-vehicle speaker that emits sound at least inside a vehicle cabin of the battery electric vehicle 100. As another example, the speaker 11 may include an external speaker that emits sound to an outside of the battery electric vehicle 100. The battery electric vehicle 100 may include both of an in-vehicle speaker and an external speaker as the speaker 11. The speaker 11 may be configured as a part of the HMI 20. An output of the speaker 11 is controlled by a control device 101 to be described later.

The battery electric vehicle 100 includes an instrument 13. The instrument 13 displays various information. Examples of the instrument 13 include a speedometer, an odometer, a tachometer, a trip meter, and a remaining battery indicator. The instrument 13 may be configured as a part of the HMI 20. Display of the instrument 13 is controlled by the control device 101 to be described later.

The battery electric vehicle 100 includes the control device 101. Various sensors and control target devices installed in the battery electric vehicle 100 are connected to the control device 101 by an on-board network, such as a control area network (CAN). Various sensors other than the vehicle speed sensor 30, the accelerator position sensor 32, the brake position sensor 34, and the rotation speed sensor 40 may be installed in the battery electric vehicle 100 and connected to the control device 101 through the on-board network.

Based on signals acquired from the sensors, the control device 101 generates control signals for various types of control of the battery electric vehicle 100. The control device 101 is typically an electronic control unit (ECU). The control device 101 may be a combination of a plurality of ECUs. The control device 101 includes one or more processors 102 (hereinafter referred to simply as a "processor 102") and one or more storage devices 103 (hereinafter referred to simply as a "storage device 103").

The processor 102 executes various processes. The processor 102 is formed by, for example, a general-purpose processor, a special-purpose processor, a central processing unit (CPU), a graphics processing unit (GPU), an application-specific integrated circuit (ASIC), a field-programmable gate array (FPGA), an integrated circuit, a conventional circuit, or a combination of one or more each of these. The processor 102 can also be called processing circuitry. The processing circuitry is hardware programmed to realize the function of the control device 101, or hardware that executes the function of the control device 101.

The storage device 103 stores various information needed to execute processes of the processor 102. The storage device 103 is formed by, for example, a randomaccess memory (RAM), a read-only memory (ROM), a solid-state drive (SSD), or a hard disk drive (HDD). The storage device 103 stores a computer program 104 that is executable in the processor 102 and various data 105. The computer program 104 is composed of a plurality of instruction codes that describes a process to be executed by the processor 102. The computer program 104 is recorded in a computer-readable recording medium. The function of the control device 101 is realized through cooperation between the processor 102 executing the computer program 104 and the storage device 103.

The control device 101 according to this embodiment has at least two control modes, namely, a normal mode and the on-demand mode, regarding control of the battery electric vehicle 100. Control of the battery electric vehicle 100 executed by the control device 101 changes according to a selected control mode. In the following, the control modes of the battery electric vehicle 100 will be described.

3 Control Modes of Battery Electric Vehicle

As described above, the control modes of the battery electric vehicle 100 include at least the two modes of the normal mode and the on-demand mode. The normal mode is a control mode in which control of the battery electric vehicle 100 is performed such that the battery electric vehicle 100 behaves as an ordinary BEV. On the other hand, the on-demand mode is a control mode in which the driving environment properties of a virtual mobility selected from a plurality of virtual mobilities (hereinafter referred to as a "target virtual mobility") are reproduced in the battery electric vehicle 100. When the battery electric vehicle 100 is in the on-demand mode, the control device 101 performs control of the battery electric vehicle 100 such that the driver can experience a driving environment as if driving the target virtual mobility. In particular, the driving environment properties of the target virtual mobility reproduced in the on-demand mode include an acceleration property of the virtual mobility in response to the driver's driving operation. Details of control of the battery electric vehicle 100 in each of the normal mode and the on-demand mode will be described later.

In the on-demand mode, the virtual mobilities include various mobilities different from one another in the driving environment properties in response to the driver's driving operation. "Mobility" is a generic term for vehicles that drivers can drive by operating the driving operation members. The virtual mobilities are typically vehicles having different driving environment properties from the battery electric vehicle 100. However, the virtual mobilities may also be various forms of vehicles, such as a motorbike or a train. Each virtual mobility may be based on an assumption of a real-life mobility or may virtually represent a mobility that does not exist in the reality. A difference in the acceleration property as a driving environment property is generally attributable to a difference in the configuration of a powertrain from a drive source to drive wheels or a difference in a control technique of the powertrain. Therefore, the virtual mobilities can also be considered as including various mobilities different from one another in at least some elements of the configuration or the control technique relating to the powertrain. In the following, the virtual mobilities are assumed to be vehicles to simplify the description.

A control mode is selected by the driver operating the HMI 20. The HMI 20 is configured to receive an input of selection of a control mode from the driver. Further, the HMI 20 is configured to receive an input of selection of a target virtual mobility from the driver regarding the on-demand mode.

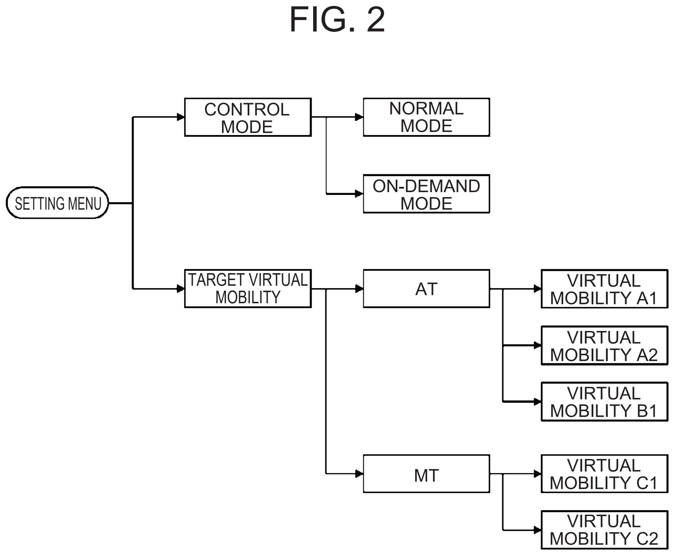

FIG. 2 is a tree diagram showing an example of inputs of selection that the HMI 20 receives. For example, the HMI 20 receives an input of selection from the driver as follows in accordance with the tree shown in FIG. 2 through display on the display or the touch screen.

First, the HMI 20 displays a setting menu screen on the display or the touch screen according to the driver's operation. In an initial screen of the setting menu screen, an option "control mod" and an option "target virtual mobility" are displayed. The option "control mode" is an option for receiving an input of selection of a control mode from the driver. The option "target virtual mobility" is an option for receiving an input of selection of a target virtual mobility from the driver.

When the option "control mode" is selected, an option "normal mode" and an option "on-demand mode" are displayed next in the setting menu screen. When the option "normal mode" is selected, the HMI 20 determines the control mode of the battery electric vehicle 100 to be the normal mode. When the option "on-demand mode" is selected, the HMI 20 determines that the control mode of the battery electric vehicle 100 to be the on-demand mode. Thus, the HMI 20 receives an input of selection of a control mode from the driver.

On the other hand, when the option "target virtual mobility" is selected, an option "AT" and an option "MT" are displayed next in the setting menu screen. The option "AT" and the option "MT" each represent a category of a plurality of virtual mobilities that is selectable in the on-demand mode. AT is a category representing vehicles equipped with an automatic transmission (AT). MT is a category representing vehicles equipped with a manual transmission (MT).

When the option "AT" is selected, an option "virtual mobility A1," an option "virtual mobility A2," and an option "virtual mobility B1" are displayed next in the setting menu screen. The virtual mobility A1, the virtual mobility A2, and the virtual mobility B1 are virtual mobilities that are classified into AT among the selectable virtual mobilities. Similarly, when the option "MT" is selected, an option "virtual mobility C1" and an option "virtual mobility C2" are displayed next in the setting menu screen. The virtual mobility C1 and the virtual mobility C2 are virtual mobilities that are classified into MT among the selectable virtual mobilities. When one of these options is selected, the HMI 20 determines the selected virtual mobility to be the target virtual mobility. For example, when the option "virtual mobility A2" is selected, the HMI 20 determines the virtual mobility A2 to be the target virtual mobility. Thus, the HMI 20 receives an input of selection of a target virtual mobility from the driver.

The categories of the virtual mobilities in the above description is one example, and the options relating to the categories may be changed as appropriate. For example, the options relating to the categories may further include an option representing vehicles equipped with a continuously variable transmission (CVT). Moreover, for example, the options relating to the categories may be options representing other categories such as categories relating to the type of the drive system (e.g.: an internal combustion engine vehicle, a hybrid electric vehicle, a plug-in hybrid electric vehicle, a fuel cell electric vehicle, and a battery electric vehicle), categories relating to the type of the drive source installed (e.g.: a straight-four supercharged engine, a flat-six engine, a V12 engine, a battery, and a fuel cell), and categories relating to a driving operation pattern (e.g.: whether clutch operation is involved and whether paddle shifting operation is involved). In addition, for example, the options relating to the categories may be composed of a plurality of hierarchical levels. For example, after a category relating to the type of the transmission is selected, options relating to a category regarding the driving operation pattern may be displayed in the setting menu screen. Alternatively, the setting menu screen may display options relating to a virtual mobility as a list, without displaying options relating to categories.

Regarding each option, the name displayed in the setting menu screen may be given as appropriate in consideration of the driver's ease of understanding. For example, the name displayed for an option relating to a virtual mobility may be a concrete name like a vehicle type or a product name such that the driver can easily imagine that virtual mobility.

As has been described above, the driver can select a control mode by operating the HMI 20. The control device 101 controls the battery electric vehicle 100 according to the selected control mode.

The control device 101 according to this embodiment functions as a drive control device that performs drive control of the battery electric vehicle 100 by controlling the output of the electric motor 2 according to the driver's driving operation. Specifically, the control device 101 functions as the drive control device as the processor 102 executes the computer program 104 for drive control that is stored in the storage device 103. In the following, control of the battery electric vehicle 100 by the drive control device will be described.

4 Drive Control Device

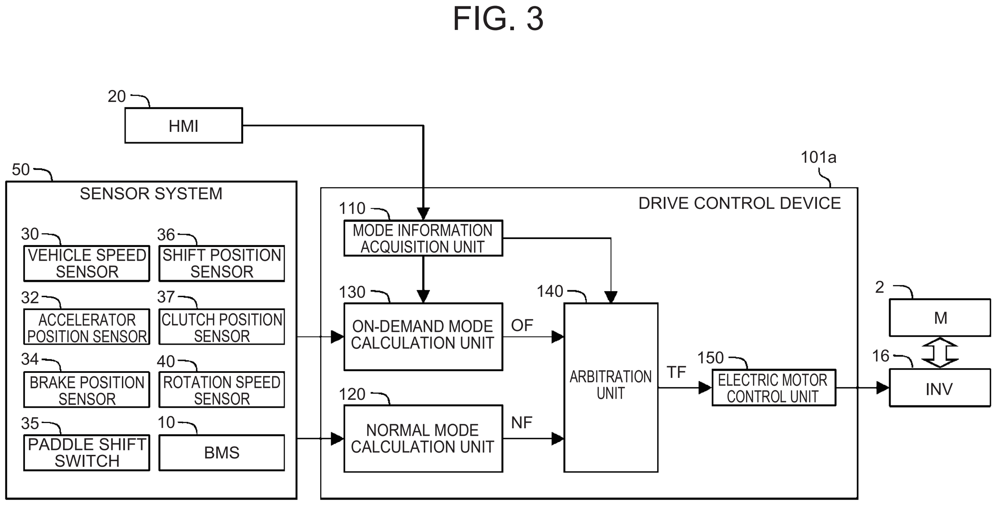

FIG. 3 is a view showing one example of a functional configuration of a drive control device 101a. The drive control device 101a calculates a target drive force TF of the battery electric vehicle 100 according to the driver's driving operation. Then, the drive control device 101a controls the output of the electric motor 2 so as to realize the calculated target drive force TF.

Signals from the HMI 20 and the sensor system 50 are input into the drive control device 101a. The sensor system 50 includes the vehicle speed sensor 30, the accelerator position sensor 32, the brake position sensor 34, the shift switch 35, the shift position sensor 36, the clutch position sensor 37, the rotation speed sensor 40, and the battery management system 10. The sensor system 50 may further include a steering angle sensor for detecting a steering angle of the steering wheel, a yaw rate sensor for detecting a yaw rate of the battery electric vehicle 100, an inertial measurement unit (IMU) for detecting a posture of the battery electric vehicle 100, a sensor for detecting a surrounding environment of the battery electric vehicle 100 (e.g.: a camera, a radar, or an LiDAR), etc.

The signals input from the HMI 20 into the drive control device 101a include a signal indicating a control mode selected by the driver, and a signal indicating a target virtual mobility selected by the driver. The signals input from the sensor system 50 into the drive control device 101a include signals indicating the operated states of the driving operation members (e.g.: the accelerator pedal 22, the brake pedal 24, the pseudo-paddle shifter 25, the pseudo-H-pattern shifter 26, and the pseudo-clutch pedal 27), and signals indicating a travel state of the battery electric vehicle 100 (e.g.: the vehicle speed and the state of charge (SOC) of the battery 14).

The drive control device 101a includes, as functional blocks, a mode information acquisition unit 110, a normal mode calculation unit 120, an on-demand mode calculation unit 130, an arbitration unit 140, and an electric motor control unit 150. These functional blocks are realized through cooperation between the processor 102 executing the computer program 104 and the storage device 103.

The mode information acquisition unit 110 receives a signal from the HMI 20 and acquires information about which one of the normal mode and the on-demand mode has been selected. The mode information acquisition unit 110 acquires information on a target virtual mobility selected from a plurality of virtual mobilities. The mode information acquisition unit 110 transmits information on the selected control mode to the arbitration unit 140. The mode information acquisition unit 110 transmits information on the selected target virtual mobility to the on-demand mode calculation unit 130.

The normal mode calculation unit 120 calculates the target drive force NF for the normal mode (hereinafter referred to as a "normal target drive force NF") based on a signal from the sensor system 50. The normal target drive force NF is a target drive force for making the battery electric vehicle 100 behave as an ordinary BEV.

For example, the normal mode calculation unit 120 calculates the normal target drive force NF using a map. In this case, the map can be configured to give the normal target drive force NF using, as parameters, the operated state of a driving operation member and the travel state of the battery electric vehicle 100. For example, the map gives the normal target drive force NF using, as parameters, the accelerator operation amount of the accelerator pedal 22 and the rotation speed of the electric motor 2. Further, the map may be configured to give the normal target drive force NF using, as parameters, the brake operation amount of the brake pedal 24 or the SOC of the battery 14.

The normal mode calculation unit 120 transmits the calculated normal target drive force NF to the arbitration unit 140. The process involved with the normal mode calculation unit 120 in this embodiment may be changed as appropriate. For the process involved with the normal mode calculation unit 120, a commonly known suitable technique that is used to calculate a target drive force in a conventional ordinary BEV can be adopted.

The on-demand mode calculation unit 130 acquires information on the target virtual mobility from the mode information acquisition unit 110. The on-demand mode calculation unit 130 calculates a target drive force OF for the on-demand mode (hereinafter referred to as an "on-demand target drive force OF") based on signals from the sensor system 50. The on-demand target drive force OF is a target drive force for reproducing, in the battery electric vehicle 100, an acceleration property of a virtual mobility in response to the driver's driving operation. Details of the process executed by the on-demand mode calculation unit 130 will be described later. The on-demand mode calculation unit 130 transmits the calculated on-demand target drive force OF to the arbitration unit 140.

The arbitration unit 140 arbitrates the target drive force TF used for control of the electric motor 2 according to the selected control mode. Specifically, while the on-demand mode is selected, the arbitration unit 140 transmits the on-demand target drive force OF calculated by the on-demand mode calculation unit 130 to the electric motor control unit 150. While the normal mode is selected, the arbitration unit 140 transmits the normal target drive force NF calculated by the normal mode calculation unit 120 to the electric motor control unit 150. When the control mode is switched, the arbitration unit 140 may gradually change the target drive force TF to be transmitted to the electric motor control unit 150. For example, when the control mode is switched from the normal mode to the on-demand mode, the arbitration unit 140 may set, as the target drive force TF, a value by which the normal target drive force NF is gradually changed to the on-demand target drive force OF over a certain switching period.

The drive control device 101a may be configured not to execute the process involved with the normal mode calculation unit 120 while the on-demand mode is selected. Similarly, the drive control device 101a may be configured not to execute the process involved with the on-demand mode calculation unit 130 while the normal mode is selected. This configuration can reduce the processing cost of the drive control device 101a in each control mode.

The electric motor control unit 150 controls the electric motor 2 so as to realize the target drive force TF transmitted from the arbitration unit 140. More specifically, the electric motor control unit 150 generates a control signal for the inverter 16 according to the target drive force TF. Then, the electric motor control unit 150 changes the motor torque to be output by the electric motor 2 through PWM control by the inverter 16.

Thus, the drive control device 101a calculates the target drive force TF of the battery electric vehicle 100 according to the control mode, and controls the output of the electric motor 2 so as to realize the calculated target drive force TF. In particular, while the on-demand mode is selected, the drive control device 101a controls the output of the electric motor 2 so as to reproduce the acceleration property of the target virtual mobility in the battery electric vehicle 100. On the other hand, the acceleration property of the battery electric vehicle 100 while the normal mode is selected is the acceleration property of an ordinary BEV.

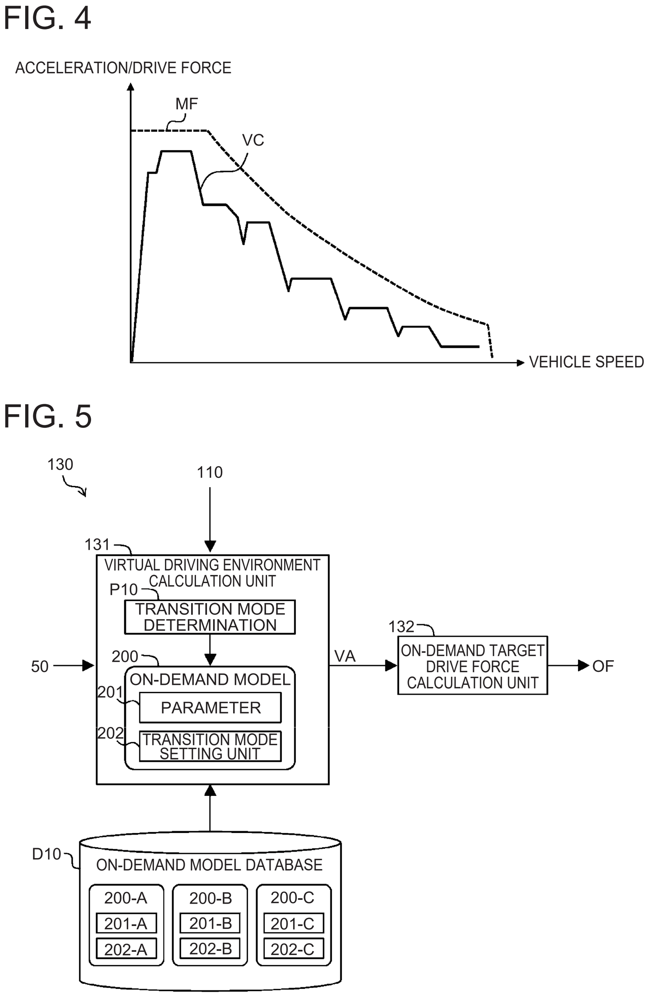

FIG. 4 is a view showing one example of an acceleration property VC of a target virtual mobility reproduced in the battery electric vehicle 100. FIG. 4 also shows one example of an output property MF of the battery electric vehicle 100. The output property MF can also be considered as an acceleration property of the battery electric vehicle 100 while the normal mode is selected.

The acceleration property of the battery electric vehicle 100 while the on-demand mode is selected reproduces the acceleration property VC of the target virtual mobility. Therefore, the acceleration property of the battery electric vehicle 100 while the on-demand mode is selected changes in various patterns according to the target virtual mobility as the target virtual mobility is changed. As a result, in the on-demand mode, the driver can enjoy the acceleration properties of various virtual mobilities in the battery electric vehicle 100.

In the following, a process executed by the on-demand mode calculation unit 130 will be specifically described.

4.1 On-Demand Mode Calculation Unit

FIG. 5 is a view showing one example of a functional configuration of the on-demand mode calculation unit 130. The on-demand mode calculation unit 130 calculates the on-demand target drive force OF. The on-demand mode calculation unit 130 includes, as functional blocks, a virtual driving environment calculation unit 131 and an on-demand target drive force calculation unit 132. The on-demand mode calculation unit 130 is configured to be able to access an on-demand model database D10.

The on-demand model database D10 is a database that manages a plurality of on-demand models 200 modeled after a plurality of virtual mobilities. The on-demand model database D10 may be stored in the storage device 103 as the data 105. Each on-demand model 200 managed by the on-demand model database D10 may be updated as needed. A new on-demand model 200 may be downloaded to the on-demand model database D10 as needed. In the example shown in FIG. 5, the on-demand model database D10 manages three on-demand models 200-A, 200-B, 200-C. Each on-demand model 200 is a model that simulates the driving environment of a virtual mobility in response to the driver's driving operation using, as inputs, the operated state of a driving operation member and the travel state of the battery electric vehicle 100. In particular, each on-demand model 200 is configured to be able to simulate the acceleration property of a virtual mobility. That is, each on-demand model 200 is configured to be able to simulate at least a drive force given to the virtual mobility in response to the driver's driving operation and acceleration-deceleration behavior of the virtual mobility under the action of that drive force. A simulation result of the acceleration-deceleration behavior of the virtual mobility obtained by each on-demand model 200 includes a virtual acceleration VA of the virtual mobility.

Typically, each on-demand model 200 includes a control model that simulates a control system relating to a powertrain of the virtual mobility, and a plant model that simulates the acceleration-deceleration behavior of the virtual mobility according to a control signal from the control model. In this case, the plant model includes a model of the powertrain that behaves based on the control signal from the control model and a model for simulating the behavior of the virtual mobility under the action of the virtual drive force of the powertrain model. One example of the configuration of the on-demand model 200 will be described later.

Each on-demand model 200 has a parameter 201 relating to the behavior of the virtual mobility in the simulation. Examples of the parameter 201 include a weight, a wheel diameter, a gear ratio, drive source maximum torque, drive torque responsivity, and a shifting schedule. The contents of the parameter 201 may differ from one on-demand model 200 to another. The on-demand model 200 represents a model of one virtual mobility by being combined with a set value of the parameter 201. For example, each virtual mobility represents a model of one virtual mobility by a combination of the on-demand model 200 and the set value of the parameter 201. As shown in the following table, the same on-demand model 200 may correspond to different virtual mobilities. One example of such a case is where the powertrain systems are of the same type and each virtual mobility can be represented by changing the set value of the parameter 201.

[Table 1]

| Virtual mobility | On-demand model | Parameter |
|---|---|---|
| Virtual mobility A1 | 200-A | Set value A1 |
| Virtual mobility A2 | 200-A | Set value A2 |
| Virtual mobility B1 | 200-B | Set value B1 |
| Virtual mobility C1 | 200-C | Set value C1 |
| Virtual mobility C2 | 200-C | Set value C2 |

The virtual driving environment calculation unit 131 acquires information on the target virtual mobility from the mode information acquisition unit 110. Based on the acquired information, the virtual driving environment calculation unit 131 retrieves the on-demand model 200 (target on-demand model) corresponding to the target virtual mobility with reference to the on-demand model database D10. Further, the virtual driving environment calculation unit 131 sets the parameter 201 of the retrieved on-demand model 200 according to the target virtual mobility. For example, when the target virtual mobility is "virtual mobility B1" in the above table, the virtual driving environment calculation unit 131 retrieves the on-demand model 200-B with reference to the on-demand model database D10. Then, the virtual driving environment calculation unit 131 sets the parameter 201-B of the on-demand model 200-B to the set value B1.

Using the retrieved target on-demand model, the virtual driving environment calculation unit 131 simulates the virtual driving environment of the target virtual mobility in response to the driver's driving operation. More specifically, the virtual driving environment calculation unit 131 receives a signal from the sensor system 50 and acquires information on the operated state of a driving operation member and information on the travel state of the battery electric vehicle 100, which are to be input into the target on-demand model. For example, the virtual driving environment calculation unit 131 acquires the accelerator operation amount of the accelerator pedal 22 and the vehicle speed of the battery electric vehicle 100. In addition, the virtual driving environment calculation unit 131 may acquire, according to the configuration of the target on-demand model, information such as the brake operation amount of the brake pedal 24, an upshift signal, a downshift signal, a shift position selected by the pseudo-H-pattern shifter 26, the amount of stepping on the pseudo-clutch pedal 27, the steered angle of the steering wheel, the shift position selected by the selector, the rotation speed of the electric motor 2, the SOC of the battery 14, the yaw rate of the battery electric vehicle 100, etc. Then, the virtual driving environment calculation unit 131 simulates the virtual driving environment of the target virtual mobility by inputting the acquired information into the target on-demand model. In particular, the virtual driving environment calculation unit 131 calculates the virtual acceleration VA of the target virtual mobility in response to the driver's driving operation through simulation of the virtual driving environment of the target virtual mobility. The virtual driving environment calculation unit 131 transmits the calculated virtual acceleration VA to the on-demand target drive force calculation unit 132.

Upon acquiring the virtual acceleration VA, the on-demand target drive force calculation unit 132 calculates a drive force for adapting the acceleration of the battery electric vehicle 100 to the virtual acceleration VA as the on-demand target drive force OF. For example, as shown in the following expression, the on-demand target drive force calculation unit 132 converts the virtual acceleration VA into the on-demand target drive force OF using a simple inverse model of the battery electric vehicle 100. In the following expression, m is the vehicle weight of the battery electric vehicle 100, and $F_{load}$ is actual travel resistance acting on the battery electric vehicle 100. The on-demand mode calculation unit 130 outputs the on-demand target drive force OF calculated by the on-demand target drive force calculation unit 132.

$$OF = m * VA - F_{load}$$

As has been described above, the on-demand mode calculation unit 130 calculates the virtual acceleration VA of the target virtual mobility in response to the driver's driving operation by simulating the driving environment of the target virtual mobility using a target on-demand model. Then, the on-demand mode calculation unit 130 calculates the on-demand target drive force OF such that the acceleration of the battery electric vehicle 100 adapts to the calculated virtual acceleration VA. When the battery electric vehicle 100 is in the on-demand mode, the drive control device 101a changes the motor torque output by the electric motor 2 so as to give the on-demand target drive force OF to the battery electric vehicle 100.

Here, a case where the driver switches the target virtual mobility will be considered. In this case, depending on the pattern of a virtual mobility before the switching (hereinafter referred to as a "first virtual mobility") and a virtual mobility after the switching (hereinafter referred to as a "second virtual mobility"), the operational sensations may change significantly between before and after the switching. In such a case, it is difficult for the driver to adjust himself or herself immediately to the operational sensations of the second virtual mobility. As a result, the driver may feel stressed or become distracted from safe driving.

In view of this, this embodiment proposes a technique that can reduce the difficulty faced by the driver after switching of the target virtual mobility. Specifically, the on-demand mode calculation unit 130 is configured to calculate the on-demand target drive force OF in a "transition mode" when it is determined that a change in the operational sensations is significant when the target virtual mobility is switched. In the transition mode, at least some of the driving environment properties simulated by the target on-demand model change to the properties of the second virtual mobility in stages. That is, in the transition mode, not all the driving environment properties of the second virtual mobility are reproduced immediately after the target virtual mobility is switched.

In this embodiment, to perform determination about the transition mode, the virtual driving environment calculation unit 131 executes a transition mode determination process P10. By the transition mode determination process P10, the virtual driving environment calculation unit 131 performs determination as to whether to enter the transition mode and generation of instruction information that specifies the properties of the target on-demand model during the transition mode. Each on-demand model 200 has a transition mode setting unit 202 that performs setting for changing the driving environment properties based on the result of the transition mode determination process P10. In the following, the transition mode in this embodiment will be specifically described.

4.2 Transition Mode

4.2.1 Overview

As described above, in the transition mode, at least some of the driving environment properties simulated by the target on-demand model change to the properties of the second virtual mobility in stages. Here, as the driving environment properties to be changed in the transition mode, typically properties that have a significant influence on the change in the operational sensations between before and after the switching are selected. In the following, some specific examples of the function of the transition mode will be shown.

A first specific example relates to a case where the property of an amount of change in the virtual acceleration VA relative to the operation amount of the accelerator pedal 22 (accelerator operation amount) (hereinafter referred to as "accelerator sensitivity") is changed. The accelerator sensitivity property can be characterized by a maximum value and a minimum value of the accelerator sensitivity. When the accelerator sensitivity property changes significantly, the operational sensations also change significantly. For example, when the maximum value of the accelerator sensitivity of the second virtual mobility is significantly increased compared with that of the first virtual mobility, after the switching, an acceleration sensation relative to the same operation amount of the accelerator pedal 22 as before the switching becomes considerably stronger. Conversely, when the minimum value of the accelerator sensitivity of the second virtual mobility is significantly reduced compared with that of the first virtual mobility, after the switching, the acceleration sensation relative to the same operation amount of the accelerator pedal 22 as before the switching becomes considerably weaker. When the accelerator sensitivity property thus changes significantly, the driver may find it difficult to appropriately accelerate the battery electric vehicle 100.

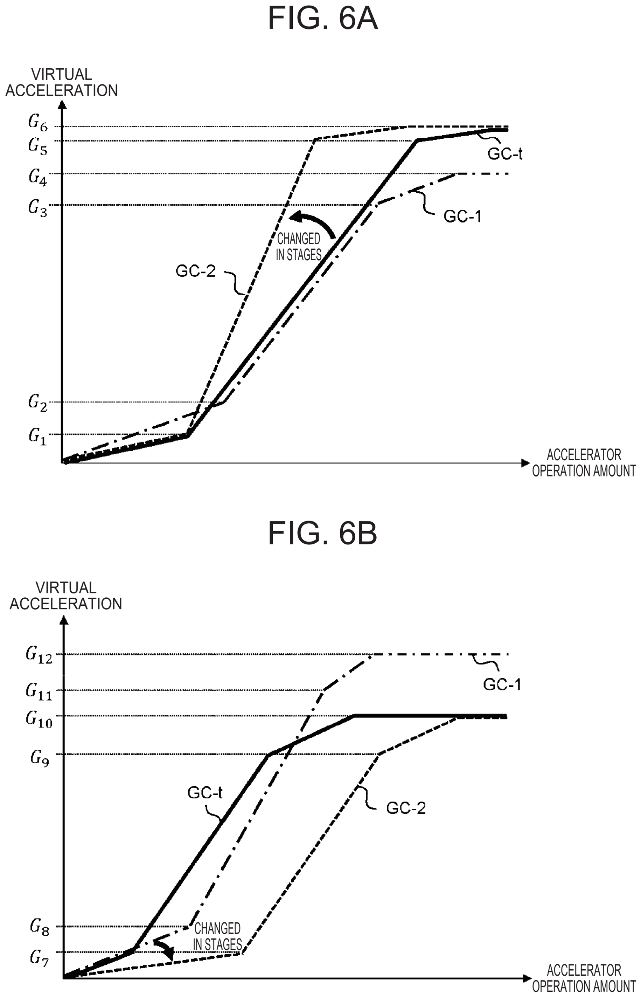

In the transition mode according to the first specific example, therefore, at least one of the maximum value and the minimum value of the accelerator sensitivity is changed in stages from the state of the first virtual mobility to the state of the second virtual mobility. FIG. 6A and FIG. 6B are views showing one example of the function of the transition mode according to the first specific example. FIG. 6A and FIG. 6B show a property GC of the virtual acceleration VA relative to the operation amount of the accelerator pedal 22 (accelerator operation amount) at a certain vehicle speed (hereinafter referred to as an "operation property GC"). GC-1 is the operation property GC of the first virtual mobility. GC-2 is the operation property GC of the second virtual mobility. GC-t is the operation property GC during the transition mode. Each operation property GC is determined by the configuration and settings of the corresponding on-demand model 200. FIG. 6A is a case where the maximum value of the accelerator sensitivity is changed in stages from the state of the first virtual mobility to the state of the second virtual mobility, and FIG. 6B is a case where the minimum value of the accelerator sensitivity is changed in stages from the state of the first virtual mobility to the state of the second virtual mobility.

First, FIG. 6A will be referred to. In the example shown in FIG. 6A, the maximum value of the accelerator sensitivity of the first virtual mobility is the accelerator sensitivity while the value of the virtual acceleration VA changes from $G_2$ to $G_3$. On the other hand, the maximum value of the accelerator sensitivity of the second virtual mobility is the accelerator sensitivity while the value of the virtual acceleration VA changes from $G_1$ to $G_5$. Hereinafter, the value of the virtual acceleration VA and the value of the accelerator operation amount will be represented by G and s, respectively, and the accelerator sensitivity will be defined as dG/ds. In particular, the accelerator sensitivity of the first virtual mobility, the accelerator sensitivity of the second virtual mobility, and the accelerator sensitivity during the transition mode will be represented by $dG^F/ds$, $dG^S/ds$, and $dG^T/ds$, respectively.

In the example shown in FIG. 6A, it can be seen that a maximum value max $(dG^S/ds)$ of the accelerator sensitivity of the second virtual mobility is significantly increased compared with a maximum value max $(dG^F/ds)$ of the accelerator sensitivity of the first virtual mobility. In the transition mode, the operation property GC-t is such that the maximum value max $(dG^T/ds)$ of the accelerator sensitivity changes from max $(dG^F/ds)$ to max $(dG^S/ds)$ in stages. It can also be said that this is restricting max $(dG^T/ds)$ by max $(dG^F/ds)$. In the operation property GC-t during the transition mode, points at which the accelerator sensitivity changes according to the value of the virtual acceleration VA are the same as those in the operation property GC-2 of the second virtual mobility. In the example shown in FIG. 6A, the accelerator sensitivity of each of the operation property GC-t and the operation property GC-2 changes when the value of the virtual acceleration VA reaches $G_1$, $G_5$, and $G_6$. Thus, the operation property GC-t during the transition mode can reproduce the operation property GC-2 of the second virtual mobility while making a significant change in the operational sensations less likely.

Determination as to whether max $(dG^S/ds)$ is significantly increased compared with max $(dG^F/ds)$ can be performed based on whether max $(dG^S/ds)$ is larger than a threshold value relating to max $(dG^F/ds)$ (hereinafter referred to as a "first threshold value"). More specifically, max $(dG^S/ds)$ can be determined to be significantly increased compared with max $(dG^F/ds)$ when the following expression is met. In the following expression, the first threshold value is max $(dG^F/ds) \times \alpha$. Here, $\alpha$ is set to a value not smaller than 1 and serves as a measure of how much max $(dG^S/ds)$ is increased compared with max $(dG^F/ds)$. Typically, $\alpha$ is set to a value between 1.0 and 2.0. However, $\alpha$ may be suitably specified through experimentation according to the environment where this embodiment is applied.

$$\max\left(\frac{dG^S}{ds}\right) > \max\left(\frac{dG^F}{ds}\right) \times \alpha$$

Next, FIG. 6B will be referred to. In the example shown in FIG. 6B, a minimum value min $(dG^F/ds)$ of the accelerator sensitivity of the first virtual mobility is the accelerator sensitivity until the virtual acceleration VA reaches $G_8$. On the other hand, a minimum value min $(dG^S/ds)$ of the accelerator sensitivity of the second virtual mobility is the accelerator sensitivity until the virtual acceleration VA reaches $G_7$. In the example shown in FIG. 6B, it can be seen that min $(dG^S/ds)$ is significantly reduced compared with min $(dG^F/ds)$. In the transition mode, the operation property GC-t is such that the minimum value min $(dG^T/ds)$ of the accelerator sensitivity changes from min $(dG^F/ds)$ to min $(dG^S/ds)$ in stages. It can also be said that this is restricting min $(dG^T/ds)$ by min $(dG^F/ds)$.

Determination as to whether min $(dG^S/ds)$ is significantly reduced compared with min $(dG^F/ds)$ can be performed based on whether min $(dG^S/ds)$ is smaller than a threshold value relating to min $(dG^F/ds)$ (hereinafter referred to as a "second threshold value"). More specifically, min $(dG^S/ds)$ can be determined to be significantly reduced compared with min $(dG^F/ds)$ when the following expression is met. In the following expression, the second threshold value is min $(dG^F/ds)$ $\times \beta$. Here, $\beta$ is set to a value not larger than 1 and serves as a measure of how much min $(dG^S/ds)$ is reduced compared with min $(dG^F/ds)$. Typically, $\beta$ is set to a value between 0 and 1.0. However, $\beta$ may be suitably specified through experimentation according to the environment where this embodiment is applied.

$$\min\left(\frac{dG^S}{ds}\right) < \min\left(\frac{dG^F}{ds}\right) \times \beta$$

Thus, in the transition mode according to the first specific example, at least one of the maximum value and the minimum value of the accelerator sensitivity is changed in stages from the state of the first virtual mobility to the state of the second virtual mobility. Here, the timing of changing at least one of the maximum value and the minimum value of the accelerator sensitivity in stages can be specified from various viewpoints as shown below.

A first viewpoint is a driving time from a point when the transition mode has been started. According to this viewpoint, as the driving time becomes longer, max $(dG^T/ds)$ changes from max $(dG^F/ds)$ to max $(dG^S/ds)$ in stages, and, instead of or in addition to that, min $(dG^T/ds)$ changes from min $(dG^F/ds)$ to min $(dG^S/ds)$ in stages.

A second viewpoint is a travel distance from a point when the transition mode has been started. According to this viewpoint, as the travel distance becomes longer, max $(dG^T/ds)$ changes from max $(dG^F/ds)$ to max $(dG^S/ds)$ in stages, and, instead of or in addition to that, min $(dG^T/ds)$ changes from min $(dG^F/ds)$ to min $(dG^S/ds)$ in stages.

A third viewpoint is the driver's level of adjustment to the operational sensations. According to this viewpoint, as the level of adjustment rises, max $(dG^T/ds)$ changes from max $(dG^F/ds)$ to max $(dG^S/ds)$ in stages, and, instead of or in addition to that, min $(dG^T/ds)$ changes from min $(dG^F/ds)$ to min $(dG^S/ds)$ in stages. The level of adjustment can be determined from the driver's driving operation pattern (maneuver of the accelerator). For example, when the driver is performing such driving operation that the battery electric vehicle 100 accelerates smoothly, it can be determined that the level of adjustment has risen. Conversely, when the driver's driving operation when accelerating the battery electric vehicle 100 is unstable (e.g., when repeatedly increasing and reducing the stepping on the accelerator pedal 22), it can be determined that the level of adjustment has not yet risen.

A fourth viewpoint is input operation by the driver. In this viewpoint, according to the driver's input operation, max $(dG^T/ds)$ changes from max $(dG^F/ds)$ to max $(dG^S/ds)$ in stages, and, instead of or in addition to that, min $(dG^T/ds)$ changes from min $(dG^F/ds)$ to min $(dG^S/ds)$ in stages. The driver performs input operation for changing at least one of the maximum value and the minimum value of the accelerator sensitivity in stages, for example, through the HMI 20. Alternatively, the battery electric vehicle 100 may include a separate operation member for changing at least one of the maximum value and the minimum value of the accelerator sensitivity in stages. In this viewpoint, input operation for changing at least one of the maximum value and the minimum value of the accelerator sensitivity in a reverse direction may be possible. For example, input operation for changing max $(dG^T/ds)$ to max $(dG^F/ds)$ may be possible.

As described above, the timing of changing at least one of the maximum value and the minimum value of the accelerator sensitivity in stages can be specified from these viewpoints. The above-described viewpoints can also be combined. The number of stages of the change may be suitably specified according to the environment where this embodiment is applied. In particular, the number of stages of the change may be one. That is, max $(dG^T/ds)$ may change from max $(dG^F/ds)$ to max $(dG^S/ds)$ in one stage, and, instead of or in addition to that, min $(dG^T/ds)$ may change from min $(dG^F/ds)$ to min $(dG^S/ds)$ in one stage.

A condition for starting the transition mode (hereinafter referred to as a "transition start condition") according to the first specific example is that the maximum value max $(dG^S/ds)$ of the accelerator operation amount of the second virtual mobility is larger than the first threshold value, or that the minimum value min $(dG^S/ds)$ of the accelerator operation amount of the second virtual mobility is smaller than the second threshold value. The transition mode according to the first specific example can be realized in the target on-demand model by, for example, appropriately changing the settings of a control map that specifies a target value of the virtual drive force of the target virtual mobility relative to a combination of the accelerator operation amount and the vehicle speed. Thus, in the first specific example, the virtual driving environment calculation unit 131 determines in the transition mode determination process P10 whether max $(dG^S/ds)$ is larger than the first threshold value and whether min $(dG^S/ds)$ is smaller than the second threshold value. When the transition start condition according to the first specific example is met, the virtual driving environment calculation unit 131 notifies the target on-demand model that the transition mode will be entered, and generates, as instruction information, the maximal value max $(dG^T/ds)$ or the minimum value min $(dG^T/ds)$ of the accelerator operation amount during the transition mode. On learning that the transition mode will be entered, the transition mode setting unit 202 of the target on-demand model changes the settings of the control map in accordance with the instruction information.

Next, a second specific example will be described. The second specific example relates to a case where required driving operation is changed. The operational sensations change significantly when a driving operation member having a characteristic function is added to the set of the driving operation members used for driving operation (hereinafter also referred to simply as a "set of driving operation members"). For example, a case will be considered where the first virtual mobility is a vehicle equipped with an AT and the second virtual mobility is a vehicle equipped with an MT. In this case, the set of driving operation members of the second virtual mobility additionally includes the pseudo-H-pattern shifter 26 and the pseudo-clutch pedal 27 compared with the set of driving operation members of the first virtual mobility. Since operation of the pseudo-H-pattern shifter 26 and the pseudo-clutch pedal 27 is unique to a vehicle equipped with an MT, the operational sensations change significantly between the first virtual mobility and the second virtual mobility. Thus, the driver may find difficulty in driving operation.

In the transition mode according to the second specific example, therefore, a state where the driving operation does not use a specific operation member of the second virtual mobility changes in stages to a state where it uses the specific operation member of the second virtual mobility. Here, "specific operation member" is a pre-specified driving operation member in the set of driving operation members of each virtual mobility. The specific operation member is typically a driving operation member that has a function characteristic of the driving operation of that virtual mobility. For example, when the virtual mobility is a vehicle equipped with an MT, the specific operation member is the pseudo-H-pattern shifter 26 or the pseudo-clutch pedal 27. However, there may be a virtual mobility for which a specific operation member is not specified in the set of driving operation members. The specific operation member of each virtual mobility may be managed by the computer program 104 or the data 105.

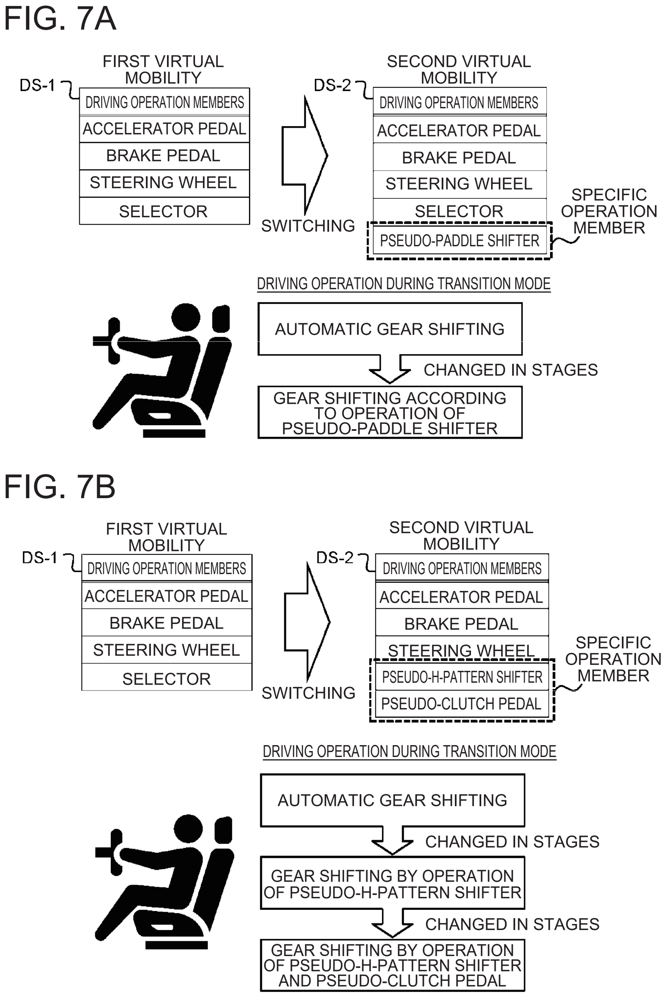

FIG. 7A and FIG. 7B are views showing one example of the function of the transition mode according to the second specific example. FIG. 7A and FIG. 7B show a set DS-1 of driving operation members of the first virtual mobility, a set DS-2 of driving operation members of the second virtual mobility, and specific operation members in the set DS-2 of driving operation members.

First, FIG. 7A will be referred to. In the example shown in FIG. 7A, the pseudo-paddle shifter 25 that is a specific operation member in the set DS-2 of driving operation members is not included in the set DS-1 of driving operation members. The second virtual mobility in the example shown in FIG. 7A is, for example, a vehicle capable of manual gear shifting according to operation of a paddle shifter. In the example shown in FIG. 7A, therefore, the driving operation during the transition mode is first in a state where gear shifting is automatically performed without using the pseudo-paddle shifter 25. In the next stage, the driving operation enters a state where gear shifting is performed according to operation of the pseudo-paddle shifter 25.

Next, FIG. 7B will be referred to. In the example shown in FIG. 7B, the pseudo-H-pattern shifter 26 and the pseudo-clutch pedal 27 that are specific operation members in the set DS-2 of driving operation members are not included in the set DS-1 of driving operation members. The second virtual mobility in the example shown in FIG. 7B is, for example, a vehicle equipped with an MT, and is a vehicle capable of manual gear shifting as an H-pattern shifter is operated in a state where the clutch pedal is stepped on. In the example shown in FIG. 7B, therefore, the driving operation during the transition mode is first in a state where gear shifting is automatically performed without using the pseudo-H-pattern shifter 26 and the pseudo-clutch pedal 27. In the next stage, the driving operation enters a state where gear shifting is performed by operation of the pseudo-H-pattern shifter 26 alone. That is, in this stage, the pseudo-clutch pedal 27 need not be stepped on. In the next stage, the driving operation enters a state where gear shifting requires operation of both the pseudo-H-pattern shifter 26 and the pseudo-clutch pedal 27.

Thus, in the transition mode according to the second specific example, the driving operation is changed in stages from a state where the specific operation member of the second virtual mobility is not used to a state where the specific operation member of the second virtual mobility is used. Here, the timing of changing the state of the driving operation in stages may be the same as in the first specific example. That is, the timing of changing the state of the driving operation in stages may be specified from the viewpoint of the driving time, the travel distance, the driver's level of adjustment to the operational sensations, the driver's input operation, etc. How to provide the stages of the change may be suitably specified according to the environment where this embodiment is applied. For example, in the example shown in FIG. 7B, the driving operation may be configured such that operation of both the pseudo-H-pattern shifter 26 and the pseudo-clutch pedal 27 becomes necessary in one stage.

A transition start condition according to the second specific example is that the specific operation member in the set DS-2 of driving operation members of the second virtual mobility is not included in the set DS-1 of driving operation members of the first virtual mobility. The transition mode according to the second specific example can be realized by, for example, appropriately switching some of the processes of the control model or the plant model in the target on-demand model. In the second specific example, therefore, the virtual driving environment calculation unit 131 determines in the transition mode determination process P10 whether the specific operation member in the set DS-2 of driving operation members is included in the set DS-1 of driving operation members. When the transition start condition according to the second specific example is met, the virtual driving environment calculation unit 131 notifies the target on-demand model that the transition mode will be entered, and generates stages of the driving operation during the transition mode as instruction information. Upon learning that the transition mode will be entered, the transition mode setting unit 202 of the target on-demand model switches some of the processes of the control model or the plant model in accordance with the instruction information.

Thus, the specific examples of the function of the transition mode have been described. The above-described first specific example and second specific example can also be combined. A different aspect of the transition mode from the above-described specific examples can also be adopted as long as at least some of the driving environment properties simulated by the target on-demand model change to the properties of the second virtual mobility in stages. One example is changing in stages the maximum value of the virtual acceleration VA from the state of the first virtual mobility to the state of the second virtual mobility.

The drive control device 101a may be configured to, in the transition mode, make a prior notification to the driver before changing the driving environment properties by one stage. For example, the drive control device 101a displays a pop-up of a prior notification on the display. In particular, in the prior notification, the drive control device 101a may ask for approval for changing the driving environment properties. The on-demand mode calculation unit 130 may be configured to change the driving environment properties by one stage on the condition that the driver has approved. Alternatively, the drive control device 101a may be configured to, in the transition mode, make an ex-post notification to the driver after changing the driving environment properties by one stage. In particular, in the ex-post notification, the drive control device 101a may ask for agreement on the change that has been made in the driving environment properties. The on-demand mode calculation unit 130 may be configured to, when the driver does not agree, restore the driving environment properties by one stage. Adopting such a configuration makes it possible to change the driving environment properties in stages in consideration of the driver's intentions.

As has been described above, the transition mode can make a significant change in operational sensations after switching of the target virtual mobility less likely. As a result, the difficulty faced by the driver after switching of the target virtual mobility can be reduced. In particular, in the transition mode, after the target virtual mobility is switched, at least some of the driving environment properties simulated by the target on-demand model can be first set to properties that take the properties of the first virtual mobility into account. This can further enhance the effect.

4.2.2 Processing Flow

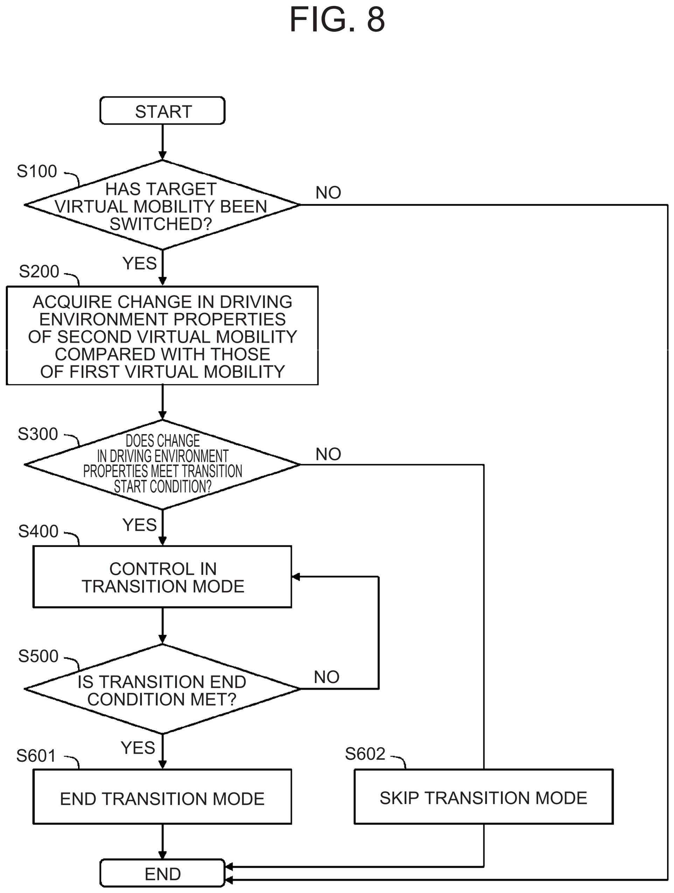

FIG. 8 is a flowchart showing a processing flow of a process that the virtual driving environment calculation unit 131 executes in the transition mode determination process P10. The processing flow shown in FIG. 8 may be repeatedly executed on a predetermined processing cycle.

First, in step S100, the virtual driving environment calculation unit 131 determines whether the target virtual mobility has been switched. The virtual driving environment calculation unit 131 can determine whether the target virtual mobility has been switched based on the information on the target virtual mobility acquired from the mode information acquisition unit 110. When the target virtual mobility has not been switched (step S100: No), the virtual driving environment calculation unit 131 ends the current process without performing determination about the transition mode. When the target virtual mobility has been switched (step S100: Yes), the process proceeds to step S200.

In step S200, the virtual driving environment calculation unit 131 acquires a change in the driving environment properties of the second virtual mobility compared with those of the first virtual mobility. For example, the virtual driving environment calculation unit 131 acquires that there are changes in the accelerator sensitivity property, the set of driving operation members, the acceleration property VC, etc. The virtual driving environment calculation unit 131 can acquire changes in the driving environment properties of the second virtual mobility compared with those of the first virtual mobility by, for example, referring to the driving environment properties of each virtual mobility that are managed in advance as the computer program 104 or the data 105.

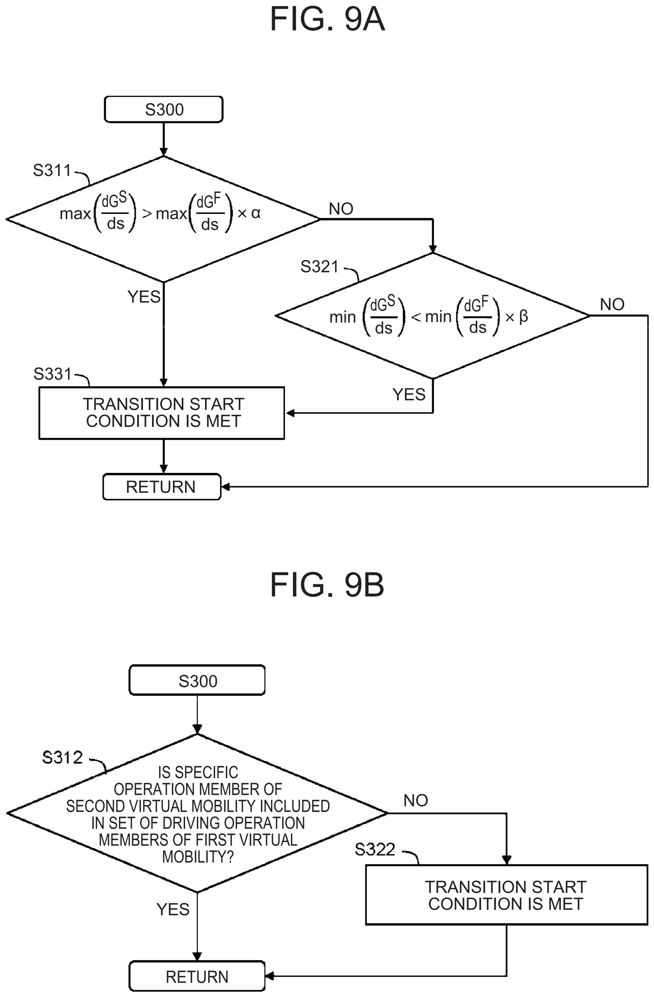

After step S200, the virtual driving environment calculation unit 131 next determines in step S300 whether the changes in the driving environment properties meet the transition start condition. Determination as to whether the transition start condition is met may be performed for each change in the driving environment properties. FIG. 9A and FIG. 9B are flowcharts showing one example of the process involved with step S300.

FIG. 9A shows one example of a process when there is a change in the accelerator sensitivity property. In step S311, the virtual driving environment calculation unit 131 determines whether the maximum value max $(dG^S/ds)$ of the accelerator sensitivity of the second virtual mobility is larger than the first threshold value (max $(dG^F/ds) \times \alpha$). When max $(dG^S/ds)$ is larger than the first threshold value (step S311: Yes), the virtual driving environment calculation unit 131 determines that the transition start condition is met regarding the accelerator sensitivity property (step S331). On the other hand, when max $(dG^S/ds)$ is equal to or smaller than the first threshold value (step S311: No), the virtual driving environment calculation unit 131 next determines whether the minimum value min $(dG^S/ds)$ of the accelerator sensitivity of the second virtual mobility is smaller than the second threshold value (min $(DG^F/ds) \times \beta$) (step S321). When min $(dG^S/ds)$ is smaller than the second threshold value (step S321: Yes), the virtual driving environment calculation unit 131 determines that the transition start condition is met regarding the accelerator sensitivity property (step S331). On the other hand, when min (dG$^S$/ds) is equal to or larger than the second threshold value (step S321: No), the virtual driving environment calculation unit 131 determines that the transition start condition is not met regarding the accelerator sensitivity property, and ends the process.

FIG. 9B shows one example of a process when there is a change in the set of driving operation members. In step S312, the virtual driving environment calculation unit 131 determines whether the set of driving operation members of the first virtual mobility includes a specific operation member of the second virtual mobility. When the set of driving operation members of the first virtual mobility includes the specific operation member of the second virtual mobility (step S312: Yes), the virtual driving environment calculation unit 131 determines that the transition start condition is not met regarding the set of driving operation members, and ends the process. When the set of driving operation members of the first virtual mobility does not include the specific operation member of the second virtual mobility (step S312: No), the virtual driving environment calculation unit 131 determines that the transition start condition is met regarding the set of driving operation members (step S322).

FIG. 8 will be referred to again. When it is determined in step S300 that the transition start condition is not met (step S300: No), the virtual driving environment calculation unit 131 skips the transition mode (step S602). That is, in this case, the target on-demand model reproduces the driving environment properties of the second virtual mobility immediately after the target virtual mobility is switched. That is, when skipping the transition mode, the processor 102 controls the motor 2 so as to reproduce the driving environment properties of the second virtual mobility without executing the transition mode. A case where the transition start condition is not met is a case where the operational sensations do not change significantly between the first virtual mobility and the second virtual mobility. In such a case, therefore, the driving environment properties of the second virtual mobility are immediately reproduced, so that the driver can immediately enjoy the operational sensations of the second virtual mobility.

When it is determined in step S300 that the transition start condition is met (step S300: Yes), the virtual driving environment calculation unit 131 starts the transition mode and performs control (step S400). That is, the drive control device 101a controls the output of the electric motor 2 in the transition mode. The driving environment property that is changed in stages under the control of the transition mode may be the change that has been determined to meet the transition start condition in step S300. For example, when the transition start condition is met regarding the accelerator sensitivity property, in the transition mode, at least one of the maximum value and the minimum value of the accelerator sensitivity is changed in stages from the state of the first virtual mobility to the state of the second virtual mobility (see FIG. 6A and FIG. 6B). For example, when the transition start condition is met regarding the set of driving operation members, the driving operation is changed in stages from a state where the specific operation member of the second virtual mobility is not used to a state where the specific operation member of the second virtual mobility is used (see FIG. 7A and FIG. 7B).

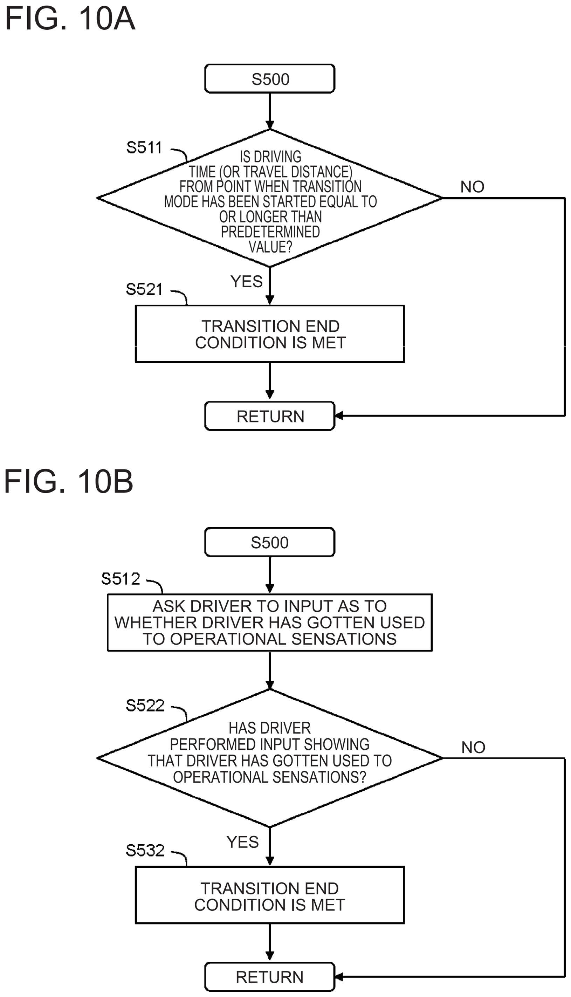

After step S400, the virtual driving environment calculation unit 131 determines whether the transition end condition is met during the control in the transition mode. The transition end condition is a condition showing that the driver has adjusted himself or herself to the operational sensations of the second virtual mobility. The transition end condition may include various conditions. The virtual driving environment calculation unit 131 determines whether the transition end condition is met in terms of any one of these conditions. FIG. 10A and FIG. 10B are flowcharts showing one example of a process relating to step S500.

FIG. 10A shows one example of a process in a case where some of the driving environment properties simulated by the target on-demand model are changed to the properties of the second virtual mobility in stages as the driving time (or the travel distance) from the point when the transition mode has been started becomes longer. In step S511, the virtual driving environment calculation unit 131 determines whether the driving time (or the travel distance) from the point when the transition mode has been started is equal to or longer than a predetermined value. The predetermined value is, for example, a value obtained by adding a predetermined margin to a value for the driving environment properties simulated by the target on-demand model to change to the properties of the second virtual mobility. When the driving time (or the travel distance) is equal to or longer than the predetermined value, the driving environment properties of the target on-demand model have sufficiently changed to the properties of the second virtual mobility, and therefore the driver is considered to have adjusted himself or herself to the operational sensations of the second virtual mobility. Accordingly, when the driving time (or the travel distance) from the point when the transition mode has been started is equal to or longer than the predetermined value (step S511: Yes), the virtual driving environment calculation unit 131 determines that the end condition is met (step S521). On the other hand, when the driving time (or the travel distance) from the point when the transition mode has been started is shorter than the predetermined value (step S511: No), the virtual driving environment calculation unit 131 determines that the transition end condition is not met, and ends the process.

FIG. 10B shows one example of a process in a case where whether to end the transition mode is determined according to the driver's input operation. The processing flow shown in FIG. 10B is executed at a predetermined timing during the transition mode. The predetermined timing is, for example, when the driving environment properties of the target on-demand model have changed to the properties of the second virtual mobility. Alternatively, the predetermined timing may be when the transition mode is started. In step S512, the virtual driving environment calculation unit 131 asks the driver to input through the HMI 20 as to whether the driver has gotten used to the operational sensations of the second virtual mobility. For example, the virtual driving environment calculation unit 131 displays, on the display, a window that asks the driver to select "Yes" when he or she deems himself or herself to have gotten used to the operational sensations of the second virtual mobility. The virtual driving environment calculation unit 131 may continuously display this window while the transition mode continues. Alternatively, when the window is deleted, the virtual driving environment calculation unit 131 may display the window on the display each time a certain time elapses. When the driver has performed input showing that he or she has gotten used to the operational sensations of the second virtual mobility (step S522: Yes), the virtual driving environment calculation unit 131 determines that the end condition is met (step S532). On the other hand, when the driver has not performed input showing that he or she has gotten used to the operational sensations of the second virtual mobility (step S522: No), the virtual driving environment calculation unit 131 determines that the transition end condition is not met, and ends the process.

Other examples of the transition end condition include that the driver's level of adjustment to the operational sensations has become equal to or higher than a predetermined level, and that a certain time has elapsed or a certain distance has been traveled since the driving environment properties of the target on-demand model have changed to the properties of the second virtual mobility.

FIG. 8 will be referred to again. When it is determined in step S500 that the transition end condition is not met (step S500: No), the virtual driving environment calculation unit 131 continues the transition mode and performs the control (step S400). On the other hand, when it is determined in step S500 that the transition end condition is met (step S500: Yes), the virtual driving environment calculation unit 131 ends the transition mode.

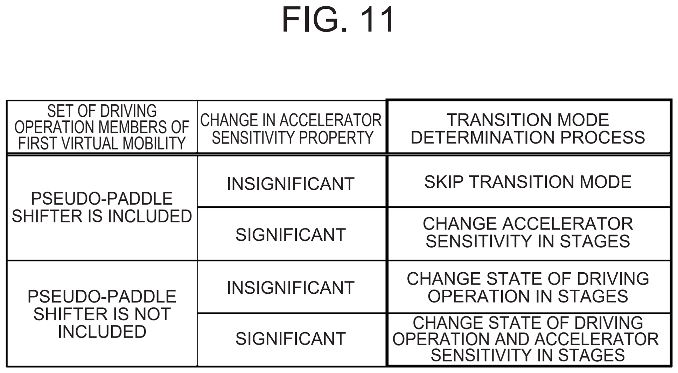

As has been described above, the virtual driving environment calculation unit 131 executes the transition mode determination process P10. FIG. 11 is a view showing an example of implementation of the transition mode determination process P10. FIG. 11 shows a case where the specific operation member of the second virtual mobility is the pseudo-paddle shifter 25. As shown in FIG. 11, whether to enter the transition mode and which driving environment property is changed in the transition mode are determined according to whether the set of driving operation members of the first virtual mobility includes the pseudo-paddle shifter 25 (specific operation member) and whether the change in the accelerator sensitivity property is significant or insignificant.

4.2.3 Modified Example

The transition mode determination process P10 may be configured not to skip the transition mode. That is, the transition mode determination process P10 may be configured to enter the transition mode, regardless of the transition start condition, when the target virtual mobility is switched. This configuration can also reduce the difficulty faced by the driver after switching of the target virtual mobility. The processing cost can also be reduced.

4.3 Example of Configuration of On-Demand Model

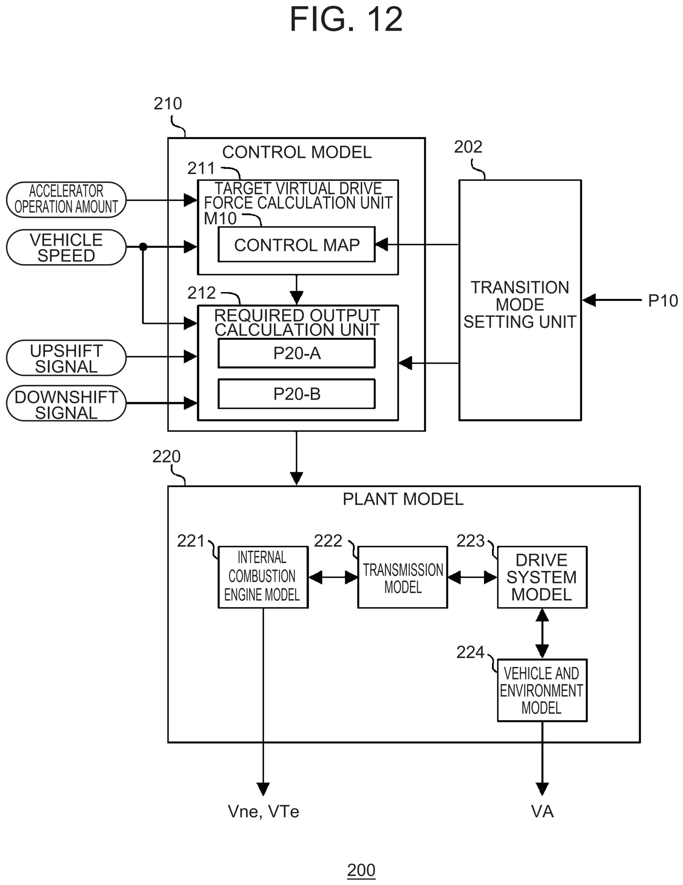

In the following, one example of a configuration of the on-demand model 200 managed by the on-demand model database D10 will be described. FIG. 12 is a view showing one example of the configuration of the on-demand model 200. The on-demand model 200 includes a control model 210 and a plant model 220. The control model 210 simulates a control system relating to the powertrain of the virtual mobility. The plant model 220 simulates the acceleration-deceleration behavior of the virtual mobility according to a control signal from the control model 210. The plant model 220 includes a model of a powertrain that behaves based on the control signal from the control model 210 and a model for simulating the behavior of the virtual mobility under the action of the virtual drive force of the powertrain model. It can also be said that the control model 210 simulates a control system that calculates a required output for the powertrain of the virtual mobility. Further, it can also be said that the plant model 220 simulates a physical restriction on the required output of the powertrain.

The specifications of each of the control model 210 and the plant model 220 may differ according to the type of the powertrain system. For example, an internal combustion engine vehicle and a hybrid electric vehicle differ from each other in the configurations of the control system, the transmission, and the drive system. Therefore, the on-demand model 200 of an internal combustion engine vehicle and the on-demand model 200 of a hybrid electric vehicle are different from each other in the specifications of both the control model 210 and the plant model 220. The example shown in FIG. 12 shows a case where, in particular, the virtual mobility is a vehicle equipped with an AT and capable of manual gear shifting according to operation of a paddle shifter.

The control model 210 includes a target virtual drive force calculation unit 211 and a required output calculation unit 212. The target virtual drive force calculation unit 211 calculates a virtual drive force (target virtual drive force) required of the powertrain of the virtual mobility based on a control map M10. The control map M10 gives the target virtual drive force for a combination of the accelerator operation amount and the vehicle speed. The settings of the control map M10 can be changed by the transition mode setting unit 202. When entering the transition mode, the transition mode setting unit 202 changes the settings of the control map M10 in accordance with the instruction information acquired from the transition mode determination process P10. Thus, the operation property GC to be reproduced by the on-demand model 200 can be changed. In particular, the accelerator sensitivity property can be changed.

The required output calculation unit 212 acquires the vehicle speed and a target virtual driving force calculated by the target virtual drive force calculation unit 211. Further, the required output calculation unit 212 acquires an upshift signal and a downshift signal output by the shift switch 35 provided in the pseudo-paddle shifter 25. Based on the acquired information, the required output calculation unit 212 calculates the required output for the powertrain. The calculated required output includes target engine torque of the internal combustion engine and a target gear stage of the transmission. In the example shown in FIG. 12, the process executed by the required output calculation unit 212 is switchable between a process P20-A and a process P20-B. The process P20-A is a process for reproducing normal driving operation and the process P20-B is a process for reproducing driving operation that does not use the pseudo-paddle shifter 25. For example, the required output calculation unit 212 is configured to, in the process P20-A, calculate the target gear stage of the transmission according to an upshift signal and a downshift signal. On the other hand, in the process P20-B, the required output calculation unit 212 calculates the target gear stage of the transmission according to a predetermined shifting schedule based on the vehicle speed and the target virtual drive force, without referring to an upshift signal and a downshift signal. When entering the transition mode, the transition mode setting unit 202 switches the process of the required output calculation unit 212 between the process P20-A and the process P20-B in accordance with the instruction information acquired from the transition mode determination process. Thus, the driving operation during the transition mode can be changed.

The control model 210 transmits the required output calculated by the required output calculation unit 212 to the plant model 220.

The plant model 220 includes an internal combustion engine model 221, a transmission model 222, a drive system model 223, and a vehicle and environment model 224. The internal combustion engine model 221, the transmission model 222, and the drive system model 223 are models of the powertrain from the drive source to the drive wheels. The vehicle and environment model 224 is a model for simulating the behavior of the virtual mobility under the action of the virtual drive force of the powertrain model.

The internal combustion engine model 221 is a model of the internal combustion engine of the virtual mobility. For example, the internal combustion engine model 221 simulates the behavior of the internal combustion engine in response to an input of the target engine torque. The internal combustion engine model 221 outputs a virtual engine rotation speed VNe and virtual engine torque VTe. Examples of the parameter 201 that can be changed according to the target virtual mobility in the internal combustion engine model 221 include engine maximum torque and engine torque responsivity.

The transmission model 222 is a model of the transmission of the virtual mobility. For example, the transmission model 222 simulates the behavior of the transmission in response to an input of the target gear stage. The transmission model 222 outputs virtual transmission output torque based on the gear ratio determined by the virtual engine torque VTe output by the internal combustion engine model 221 and the virtual gear stage. The transmission model 222 includes a stepped transmission model simulating a stepped transmission and a continuously variable transmission model simulating a continuously variable transmission. Either the stepped transmission model or the continuously variable transmission model is selected according to the target virtual mobility. Examples of the parameter 201 that can be changed in the transmission model 222 according to the target virtual mobility include the gear ratio and the shifting schedule. In the case of the stepped transmission model, the gear ratio means a gear ratio among gear stages.

The drive system model 223 is a model of the drive system of the virtual mobility. For example, in the drive system model 223, a mechanical structure from the transmission to the drive wheels is modeled. The drive system model 223 calculates drive wheel torque using the virtual transmission output torque output by the transmission model 222 and a predetermined speed reduction ratio, and outputs the virtual drive force of the virtual mobility. Examples of the parameter 201 that can be changed in the drive system model 223 according to the target virtual mobility include the speed reduction ratio and propeller shaft maximum allowable torque.

The vehicle and environment model 224 is a model representing dynamic properties of the virtual mobility and a travel environment of the vehicle mobility. The vehicle and environment model 224 calculates travel resistance acting on the virtual mobility based on the travel environment of the virtual mobility. Then, the vehicle and environment model 224 simulates the acceleration-deceleration behavior of the virtual mobility based on the virtual drive force output from the drive system model 223, the calculated travel distance, and the dynamic properties of the virtual mobility. The vehicle and environment model 224 outputs the virtual acceleration VA based on the acceleration-deceleration behavior of the virtual mobility. Examples of the parameter 201 that can be changed in the vehicle and environment model 224 according to the target virtual mobility include the weight, the wheel diameter, and the CD value.

The on-demand model 200 can be configured as has been described above. The on-demand model 200 shown in FIG. 12 is one example. It is also possible to configure part of the on-demand model 200 more finely according to a phenomenon that is desired to be emphasized. For example, a case will be considered where shock or response accompanying switching of engagement of gears of the transmission and the clutch upon kickdown is desired to be emphasized. In this case, the transmission model 222 may be configured to finely reproduce a gear mechanism, such as a planetary or Ravigneaux type, of the transmission, inertia of each constituent element, changes in a transmission path between when the clutch is engaged and when it is disengaged, etc. On the other hand, when the calculation load in the on-demand model 200 is desired to be reduced, the transmission model 222 may be simply configured to reproduce only the gear ratio.

5 On-Board Equipment Control Device

The control device 101 according to this embodiment functions as an on-board equipment control device that performs control of the speaker 11 and the instrument 13. Specifically, the control device 101 functions as the on-board equipment control device as the processor 102 executes the computer program 104 for on-board equipment control stored in the storage device 103. In particular, the on-board equipment control device controls the speaker 11 and the instrument 13 according to the driving environment of the target virtual mobility when the battery electric vehicle 100 is in the on-demand mode. In the following, control of the battery electric vehicle 100 by the on-board equipment control device when the battery electric vehicle 100 is in the on-demand mode will be described.

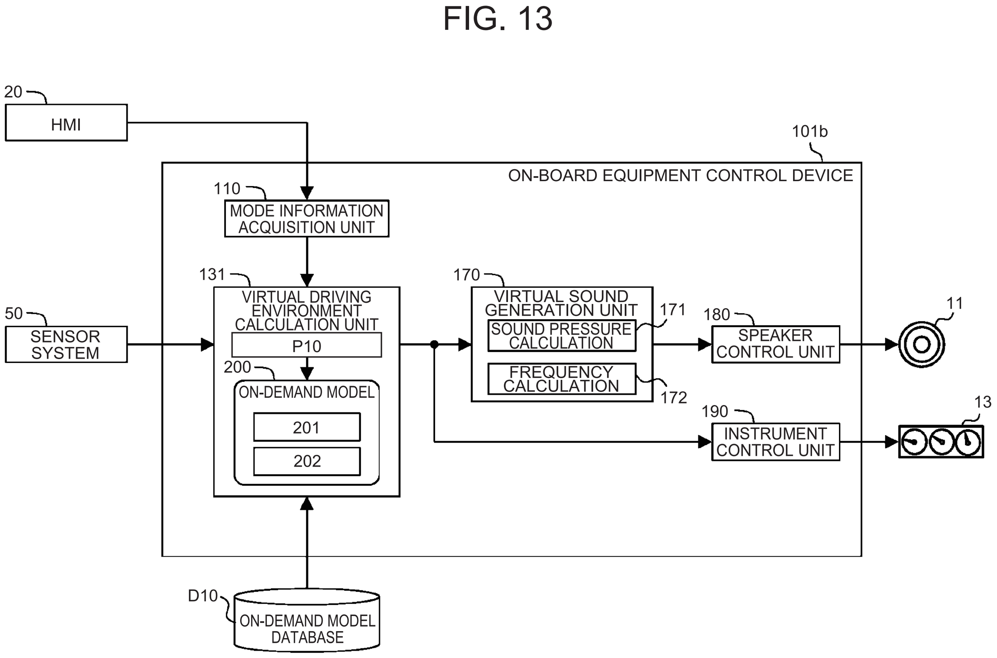

FIG. 13 is a view showing one example of a functional configuration of an on-board equipment control device 101b. The on-board equipment control device 101b controls the speaker 11 and the instrument 13 according to the driving environment of the target virtual mobility when the battery electric vehicle 100 is in the on-demand mode.

Signals from the HMI 20 and the sensor system 50 are input into the on-board equipment control device 101b. The signals input from the HMI 20 into the on-board equipment control device 101b include a signal showing a control mode selected by the driver and a signal showing a target virtual mobility selected by the driver. The signals input from the sensor system 50 into the on-board equipment control device 101b include a signal showing the vehicle speed of the battery electric vehicle 100, a signal showing the operated state of the accelerator pedal 22, a signal showing the operated state of the brake pedal 24, a signal showing the rotation speed of the electric motor 2, and a signal showing the state of charge (SOC) of the battery 14.

The on-board equipment control device 101b includes, as functional blocks, a mode information acquisition unit 110, a virtual driving environment calculation unit 131, a virtual sound generation unit 170, a speaker control unit 180, and an instrument control unit 190. These functional blocks are realized through cooperation between the processor 102 executing the computer program 104 and the storage device 103. The mode information acquisition unit 110 may be the same one that has been described with FIG. 3. The virtual driving environment calculation unit 131 may be the same one that has been described with FIG. 5.

The virtual sound generation unit 170 generates a virtual sound that should be audible to the driver in the virtual mobility in response to the driver's driving operation. For example, when the target virtual mobility is a vehicle equipped with an internal combustion engine (engine vehicle), the virtual sound is an engine sound (pseudo-engine sound) generated by the internal combustion engine of the target virtual mobility. Another example of the virtual sound is a sound of the drive system of the target virtual mobility. The virtual sound generation unit 170 acquires a sound source of the virtual sound relating to the target virtual mobility with reference to the storage device 103. The storage device 103 may store the sound source of the virtual sound relating to each target virtual mobility. The virtual sound generation unit 170 acquires information required to generate the virtual sound from the virtual driving environment calculation unit 131. For example, when the virtual sound is a pseudo-engine sound, the virtual sound generation unit 170 acquires the virtual engine rotation speed VNe and the virtual engine torque VTe from the virtual driving environment calculation unit 131. Then, the virtual sound generation unit 170 generates a virtual sound based on the sound source and the information acquired from the virtual driving environment calculation unit 131.

The virtual sound generation unit 170 executes a process 171 of calculating a sound pressure of the virtual sound and a process 172 of calculating a frequency of the virtual sound. For example, when the virtual sound is a pseudo-engine sound, in the process 171, the sound pressure of the pseudo-engine sound is calculated from the virtual engine torque VTe using a sound pressure map. The sound pressure map is typically created such that the sound pressure becomes higher as the virtual engine torque VTe becomes higher. In the process 172, the frequency of the virtual sound is calculated from the virtual engine rotation speed VNe using a frequency map. The frequency map is typically created such that the frequency becomes higher as the virtual engine rotation speed VNe becomes higher. The virtual sound generation unit 170 transmits the generated sound data of the virtual sound to the speaker control unit 180.

The speaker control unit 180 controls an output of the speaker 11 based on the sound data transmitted from the virtual sound generation unit 170. Thus, the virtual sound is output from the speaker 11.

The instrument control unit 190 controls the instrument 13 so as to display information that should be displayed to the driver in the target virtual mobility in response to the driver's driving operation (hereinafter referred to as "virtual display information"). For example, when the target virtual mobility is an engine vehicle, the virtual display information is the information of the virtual engine rotation speed VNe and the virtual gear stage of the target virtual mobility. The instrument control unit 190 acquires information relating to the virtual display information from the virtual driving environment calculation unit 131. For example, when the target virtual mobility is an engine vehicle, the instrument control unit 190 acquires the virtual engine rotation speed VNe and the virtual gear stage from the virtual driving environment calculation unit 131. Then, the instrument control unit 190 controls the display of the instrument 13 based on the acquired information. Accordingly, the virtual display information is displayed on the instrument 13.

Thus, when the battery electric vehicle 100 is in the on-demand mode, the on-board equipment control device 101b outputs a virtual sound from the speaker 11 and displays the virtual display information on the instrument 13. This can further give the driver realistic sensations as if driving the target virtual mobility.

6 Others

The technical features according to this embodiment are widely applicable not only to BEVs but also to any battery electric vehicles that have an electric motor as a drive source. For example, the technical features according to this embodiment are applicable to hybrid electric vehicles (HEVs) and plug-in hybrid electric vehicles (PHEVs) that have a mode of traveling only on a drive force of an electric motor. The technical features according to this embodiment are also applicable to fuel cell electric vehicles (FCEVs) that supply electric energy generated by a fuel cell to an electric motor.

**Claims**

1. A battery electric vehicle (100) having an electric motor (2) as a drive source, comprising:

   a driving operation member used for driving;
   one or more storage devices (103) that manage a plurality of on-demand models modeled after a plurality of virtual mobilities different from one another in driving environment properties in response to driving operation of a driver; and
   one or more processors (102) that control an output of the electric motor (2),

   wherein

   the one or more processors (102) are configured to, in a case where the battery electric vehicle (100) is in an on-demand mode:

      acquire, from the one or more storage devices (103), a target on-demand model corresponding to a target virtual mobility selected from the virtual mobilities;
      based on an operated state of the driving operation member and a travel state of the battery electric vehicle (100), calculate, using the target on-demand model, a virtual acceleration of the target virtual mobility in response to the driving operation of the driver;
      control the output of the electric motor (2) such that an acceleration of the battery electric vehicle (100) equals the virtual acceleration; and
      in a case where the target virtual mobility is switched from a first virtual mobility to a second virtual mobility, control the output of the electric motor (2) in a transition mode, wherein

   in the transition mode, the one or more processors (102) are configured to control the output of the electric motor (2) so as to change at least some of the driving environment properties simulated by the target on-demand model from properties of the first virtual mobility to properties of the second virtual mobility in stages.

2. The battery electric vehicle (100) according to claim 1, wherein:
   the one or more processors (102) are configured to, in a case where the battery electric vehicle (100) is in the on-demand mode:

      in response to the target virtual mobility being switched from the first virtual mobility to the second virtual mobility, acquire a change in the driving environment properties of the second virtual mobility compared with those of the first virtual mobility;
      determine whether the change in the driving environment properties meets a transition start condition, the transition start condition being a condition showing that operational sensations change significantly in response to a switching of the first virtual mobility to the second virtual mobility;
      when the change meets the transition start condition, control the output of the electric motor (2) in the transition mode; and
      in a case where the change in the driving environment properties does not meet the transition start condition, skip the transition mode.

3. The battery electric vehicle (100) according to claim 2, wherein:

the driving operation member includes an accelerator operation device;
the driving environment properties include a property of accelerator sensitivity that is an amount of change in the virtual acceleration relative to an operation amount of the accelerator operation device; and
at least either a case where a maximum value of the accelerator sensitivity of the second virtual mobility is larger than a first threshold value, or a case where a minimum value of the accelerator sensitivity of the second virtual mobility is smaller than a second threshold value, the one or more processors (102) determine that the change meets the transition start condition.

4. The battery electric vehicle (100) according to claim 3, wherein:

the first threshold value is a value relating to a maximum value of the accelerator sensitivity of the first virtual mobility; and
the second threshold value is a value relating to a minimum value of the accelerator sensitivity of the first virtual mobility.

5. The battery electric vehicle (100) according to any of claims 3 or 4, wherein the one or more processors (102) are configured to, in the transition mode, change in stages at least one of the maximum value and the minimum value of the accelerator sensitivity from a state of the first virtual mobility to a state of the second virtual mobility.

6. The battery electric vehicle (100) according to any of claims 2 to 5, wherein:

the driving environment properties include a set of the driving operation members used for the driving operation; and
the transition start condition includes that a specific operation member in the set of the driving operation members of the second virtual mobility is not included in the set of the driving operation members of the first virtual mobility.

7. The battery electric vehicle (100) according to claim 6, wherein the one or more processors (102) are configured to, in the transition mode, change the driving operation in stages from a state where the specific operation member is not used to a state where the specific operation member is used.

8. The battery electric vehicle (100) according to any one of claims 1 to 7, wherein:
in a case where the battery electric vehicle (100) is in the on-demand mode, the one or more processors (102) are configured to:

determine whether a transition end condition is met that shows that the driver has adjusted himself or herself to operational sensations of the second virtual mobility; and
end the transition mode in response to determining that the transition end condition is met.

9. The battery electric vehicle (100) according to claim 8, wherein:

the one or more processors (102) are configured to, in the transition mode, change in stages at least some of the driving environment properties simulated by the target on-demand model to the properties of the second virtual mobility as a driving time from a point when the transition mode has been started becomes longer; and
the one or more processors (102) determine that the transition end condition is met in a case where the driving time becomes equal to or longer than a predetermined value.

10. The battery electric vehicle (100) according to any of claims 8 or 9, wherein:

the one or more processors (102) are configured to, in the transition mode, change in stages at least some of the driving environment properties simulated by the target on-demand model to the properties of the second virtual mobility as a travel distance from a point when the transition mode has been started becomes longer; and
the one or more processors (102) determine that the transition end condition is met when the travel distance becomes equal to or longer than a predetermined value.

11. The battery electric vehicle (100) according to any of claims 8 to 10, wherein:

the one or more processors (102) are configured to, when the battery electric vehicle (100) is in the on-demand mode, ask the driver during the transition mode to input as to whether the driver has gotten used to operational sensations of the second virtual mobility; and

the one or more processors (102) determine that the transition end condition is met when the driver has performed the input showing that the driver has gotten used to the operational sensations of the second virtual mobility.

12. A control device (101) of a battery electric vehicle (100) having an electric motor (2) as a drive source, comprising:

one or more storage devices (103) that manage a plurality of on-demand models modeled after a plurality of virtual mobilities different from one another in driving environment properties in response to driving operation of a driver; and

one or more processors (102) that control an output of the electric motor (2),

wherein:

the battery electric vehicle (100) includes a driving operation member used for driving; and

the one or more processors (102) are configured to, in a case where the battery electric vehicle (100) is in an on-demand mode:

acquire, from the one or more storage devices (103), a target on-demand model corresponding to a target virtual mobility selected from the virtual mobilities;

based on an operated state of the driving operation member and a travel state of the battery electric vehicle (100), calculate, using the target on-demand model, a virtual acceleration of the target virtual mobility in response to the driving operation of the driver;

control the output of the electric motor (2) such that an acceleration of the battery electric vehicle (100) equals the virtual acceleration; and

in a case where the target virtual mobility is switched from a first virtual mobility to a second virtual mobility, control the output of the electric motor (2) in a transition mode wherein

in the transition mode, the one or more processors (102) are configured to control the output of the electric motor (2) so as to change at least some of the driving environment properties simulated by the target on-demand model from properties of the first virtual mobility to properties of the second virtual mobility in stages.

13. The control device (101) according to claim 12, wherein:

the one or more processors (102) are configured to, in a case where the battery electric vehicle (100) is in the on-demand mode:

in response to the target virtual mobility being switched from the first virtual mobility to the second virtual mobility, acquire a change in the driving environment properties of the second virtual mobility compared with those of the first virtual mobility;

determine whether the change in the driving environment properties meets a transition start condition, the transition start condition being a condition showing that operational sensations change significantly in response to a switching of the first virtual mobility to the second virtual mobility;

in a case where the change meets the transition start condition, control the output of the electric motor (2) in the transition mode; and

when the change in the driving environment properties does not meet the transition start condition, skip the transition mode.

# FIG. 1

100

# FIG. 2

```
                    ┌──────────────┐        ┌──────────────┐
                ┌──►│   CONTROL    │───┐───►│   NORMAL     │
                │   │    MODE      │   │    │    MODE      │
                │   └──────────────┘   │    └──────────────┘
 ╭──────────────╮                      │    ┌──────────────┐
 │ SETTING MENU │                      └───►│  ON-DEMAND   │
 ╰──────────────╯                           │    MODE      │
                │                            └──────────────┘
                │
                │   ┌──────────────┐        ┌──────┐        ┌──────────────┐
                └──►│TARGET VIRTUAL│───┐───►│  AT  │───┐───►│   VIRTUAL    │
                    │  MOBILITY    │   │    └──────┘   │    │ MOBILITY A1  │
                    └──────────────┘   │              │    └──────────────┘
                                       │              │    ┌──────────────┐
                                       │              ├───►│   VIRTUAL    │
                                       │              │    │ MOBILITY A2  │
                                       │              │    └──────────────┘
                                       │              │    ┌──────────────┐
                                       │              └───►│   VIRTUAL    │
                                       │                   │ MOBILITY B1  │
                                       │                   └──────────────┘
                                       │    ┌──────┐        ┌──────────────┐
                                       └───►│  MT  │───┐───►│   VIRTUAL    │
                                            └──────┘   │    │ MOBILITY C1  │
                                                       │    └──────────────┘
                                                       │    ┌──────────────┐
                                                       └───►│   VIRTUAL    │
                                                            │ MOBILITY C2  │
                                                            └──────────────┘
```

# FIG. 3

# FIG. 4

ACCELERATION/DRIVE FORCE

MF

VC

VEHICLE SPEED

# FIG. 5

130

110

131 — VIRTUAL DRIVING ENVIRONMENT CALCULATION UNIT

P10 — TRANSITION MODE DETERMINATION

50 →

200 — ON-DEMAND MODEL

201 — PARAMETER

202 — TRANSITION MODE SETTING UNIT

VA

132 — ON-DEMAND TARGET DRIVE FORCE CALCULATION UNIT

→ OF

D10 — ON-DEMAND MODEL DATABASE

| 200-A | 200-B | 200-C |
|-------|-------|-------|
| 201-A | 201-B | 201-C |
| 202-A | 202-B | 202-C |

# FIG. 6A

# FIG. 6B

# FIG. 7A

DS-1 ⌐
FIRST VIRTUAL MOBILITY

| DRIVING OPERATION MEMBERS |
| ACCELERATOR PEDAL |
| BRAKE PEDAL |
| STEERING WHEEL |
| SELECTOR |

DS-2 ⌐
SECOND VIRTUAL MOBILITY

| DRIVING OPERATION MEMBERS |
| ACCELERATOR PEDAL |
| BRAKE PEDAL |
| STEERING WHEEL |
| SELECTOR |
| PSEUDO-PADDLE SHIFTER |

SPECIFIC OPERATION MEMBER

SWITCHING

DRIVING OPERATION DURING TRANSITION MODE

| AUTOMATIC GEAR SHIFTING |

CHANGED IN STAGES

| GEAR SHIFTING ACCORDING TO OPERATION OF PSEUDO-PADDLE SHIFTER |

# FIG. 7B

DS-1 ⌐
FIRST VIRTUAL MOBILITY

| DRIVING OPERATION MEMBERS |
| ACCELERATOR PEDAL |
| BRAKE PEDAL |
| STEERING WHEEL |
| SELECTOR |

DS-2 ⌐
SECOND VIRTUAL MOBILITY

| DRIVING OPERATION MEMBERS |
| ACCELERATOR PEDAL |
| BRAKE PEDAL |
| STEERING WHEEL |
| PSEUDO-H-PATTERN SHIFTER |
| PSEUDO-CLUTCH PEDAL |

SPECIFIC OPERATION MEMBER

SWITCHING

DRIVING OPERATION DURING TRANSITION MODE

| AUTOMATIC GEAR SHIFTING |

CHANGED IN STAGES

| GEAR SHIFTING BY OPERATION OF PSEUDO-H-PATTERN SHIFTER |

CHANGED IN STAGES

| GEAR SHIFTING BY OPERATION OF PSEUDO-H-PATTERN SHIFTER AND PSEUDO-CLUTCH PEDAL |

# FIG. 8

START

S100 — HAS TARGET VIRTUAL MOBILITY BEEN SWITCHED? — NO

YES

S200 — ACQUIRE CHANGE IN DRIVING ENVIRONMENT PROPERTIES OF SECOND VIRTUAL MOBILITY COMPARED WITH THOSE OF FIRST VIRTUAL MOBILITY

S300 — DOES CHANGE IN DRIVING ENVIRONMENT PROPERTIES MEET TRANSITION START CONDITION? — NO

YES

S400 — CONTROL IN TRANSITION MODE

S500 — IS TRANSITION END CONDITION MET? — NO

YES

S601 — END TRANSITION MODE

S602 — SKIP TRANSITION MODE

END

EP 4 751 982 A1

# FIG. 9A

$$\text{S311} \quad \max\left(\frac{dG^S}{ds}\right) > \max\left(\frac{dG^F}{ds}\right) \times \alpha$$

NO

YES

$$\text{S321} \quad \min\left(\frac{dG^S}{ds}\right) < \min\left(\frac{dG^F}{ds}\right) \times \beta$$

NO

YES

S331 — TRANSITION START CONDITION IS MET

RETURN

# FIG. 9B

S300

S312 — IS SPECIFIC OPERATION MEMBER OF SECOND VIRTUAL MOBILITY INCLUDED IN SET OF DRIVING OPERATION MEMBERS OF FIRST VIRTUAL MOBILITY?

NO

YES

S322 — TRANSITION START CONDITION IS MET

RETURN

# FIG. 10A

S500

S511 — IS DRIVING TIME (OR TRAVEL DISTANCE) FROM POINT WHEN TRANSITION MODE HAS BEEN STARTED EQUAL TO OR LONGER THAN PREDETERMINED VALUE?

NO

YES

S521 — TRANSITION END CONDITION IS MET

RETURN

# FIG. 10B

S500

S512 — ASK DRIVER TO INPUT AS TO WHETHER DRIVER HAS GOTTEN USED TO OPERATIONAL SENSATIONS

S522 — HAS DRIVER PERFORMED INPUT SHOWING THAT DRIVER HAS GOTTEN USED TO OPERATIONAL SENSATIONS?

NO

YES

S532 — TRANSITION END CONDITION IS MET

RETURN

# FIG. 11

| SET OF DRIVING OPERATION MEMBERS OF FIRST VIRTUAL MOBILITY | CHANGE IN ACCELERATOR SENSITIVITY PROPERTY | TRANSITION MODE DETERMINATION PROCESS |
|---|---|---|
| PSEUDO-PADDLE SHIFTER IS INCLUDED | INSIGNIFICANT | SKIP TRANSITION MODE |
| | SIGNIFICANT | CHANGE ACCELERATOR SENSITIVITY IN STAGES |
| PSEUDO-PADDLE SHIFTER IS NOT INCLUDED | INSIGNIFICANT | CHANGE STATE OF DRIVING OPERATION IN STAGES |
| | SIGNIFICANT | CHANGE STATE OF DRIVING OPERATION AND ACCELERATOR SENSITIVITY IN STAGES |

EP 4 751 982 A1

# FIG. 12

210

**CONTROL MODEL**

ACCELERATOR OPERATION AMOUNT

VEHICLE SPEED

211

**TARGET VIRTUAL DRIVE FORCE CALCULATION UNIT**

M10

CONTROL MAP

212

**REQUIRED OUTPUT CALCULATION UNIT**

P20-A

P20-B

UPSHIFT SIGNAL

DOWNSHIFT SIGNAL

202

**TRANSITION MODE SETTING UNIT**

P10

220

**PLANT MODEL**

221 INTERNAL COMBUSTION ENGINE MODEL

222 TRANSMISSION MODEL

223 DRIVE SYSTEM MODEL

224 VEHICLE AND ENVIRONMENT MODEL

Vne, VTe

VA

200

32

# FIG. 13

Europäisches
Patentamt

European
Patent Office

Office européen
des brevets

**EUROPEAN SEARCH REPORT**

Application Number

EP 25 21 6944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/041064 A1 (NISHIMINE AKIKO [JP] ET AL) 10 February 2022 (2022-02-10) | 1-10,12, 13 | INV. B60L50/60 B60L15/20 |
| A | * paragraphs [0038] - [0040] * <br> * paragraphs [0044], [0049], [0053], [0056], [0059] * <br> * figure 1 * | 11 | |
| A | US 2023/322094 A1 (VAN NUS WARREN [US]) 12 October 2023 (2023-10-12) <br> * paragraphs [0029], [0062] * <br> * figure 1 * | 1-13 | |

-----

-----

**TECHNICAL FIELDS SEARCHED (IPC)**

B60L

The present search report has been drawn up for all claims

| Place of search | Date of completion of the search | Examiner |
|---|---|---|
| The Hague | 2 April 2026 | Lutz, Tobias |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 21 6944

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2026

| Patent document cited in search report | Publication date | Patent family member(s) | | Publication date |
|---|---|---|---|---|
| US 2022041064 A1 | 10-02-2022 | CN | 114056119 A | 18-02-2022 |
| | | DE | 102021119694 A1 | 10-02-2022 |
| | | JP | 7380478 B2 | 15-11-2023 |
| | | JP | 7468759 B2 | 16-04-2024 |
| | | JP | 2022030872 A | 18-02-2022 |
| | | JP | 2023153814 A | 18-10-2023 |
| | | US | 2022041064 A1 | 10-02-2022 |
| US 2023322094 A1 | 12-10-2023 | EP | 4496726 A1 | 29-01-2025 |
| | | JP | 2025509474 A | 11-04-2025 |
| | | US | 2023322094 A1 | 12-10-2023 |
| | | WO | 2023183849 A1 | 28-09-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7298566 B